# EUROPEAN PATENT APPLICATION

(11) **EP 3 547 611 A1**
(43) Date of publication of application: **02.10.2019**
(21) Application number: 19165139.7
(22) Date of filing: 26.03.2019
(51) Int. Cl.: H04L 12/18, G06Q 10/06, G06Q 10/10

(54) **COMMUNICATION SYSTEM, COMMUNICATION METHOD, AND INFORMATION PROCESSING APPARATUS**

(30) Priority: 30.03.2018 JP 2018070391; 19.06.2018 JP 2018116519
(71) Applicant: Ricoh Company, Ltd., Tokyo 143-8555 (JP)
(72) Inventor: HASHIMOTO, Yuuta, Tokyo, 143-8555 (JP); KUBO, Naohiko, Tokyo, 143-8555 (JP)
(74) Representative: SSM Sandmair

(57) **Abstract**

A communication system accessible to a service for managing screen information of an electronic information board is provided. The communication system includes a first information processing apparatus, and a terminal device provided in a facility, which is configured to communicate with the first information processing apparatus via a network. The first information processing apparatus acquires information about a schedule of facility utilization from a second information processing apparatus managing the schedule; requests the service to create the electronic information board in response to receiving the information about the schedule; and transmits access information for the electronic information board to the terminal device. The terminal device retrieves the access information, and accesses the electronic information board by using the access information.

## Description

### BACKGROUND OF THE INVENTION

### 1. Field of the Invention

The present disclosure relates to a communication system, a communication method, and an information processing apparatus.

### 2. Description of the Related Art

A facility such as a meeting room in which multiple attendees assemble may be reserved in advance. In recent years, by using a system such as a schedule management system, a facility can be reserved by a user such as an attendee.

Further, a technology supporting a teleconference, in which an attendee in a certain location has a meeting with other participants in a remote location, is known (see Patent Document 1, for example). Patent Document 1 discloses a system enabling multiple terminal devices to share a screen of an electronic information board such as an electronic whiteboard.

### [Citation List]

### [Patent Literature]

[Patent Document 1] Japanese Unexamined Patent Application Publication No. 2012-043380

### SUMMARY OF THE INVENTION

### [Technical Problem]

However, in the related art, when a user starts using a facility, the user needs to perform an operation to start using an electronic information board. That is, even if an attendee reserved a meeting room in advance and checks in at the meeting room, the attendee needs to perform, at a terminal device, an operation for creating an electronic information board, in addition to the check-in operation. Thus, a system in the related art is not necessarily convenient for a user.

The technology of the present disclosure has been made in view of the above problem, and aims at providing a communication system enabling a user starting to use a facility to start using an electronic information board.

### [Solution to problem]

A communication system accessible to a service for managing screen information of an electronic information board is provided. The communication system includes a first information processing apparatus, and a terminal device provided in a facility, which is configured to communicate with the first information processing apparatus via a network. The first information processing apparatus acquires information about a schedule of facility utilization from a second information processing apparatus managing the schedule; requests the service to create the electronic information board in response to receiving the information about the schedule; and transmits access information for the electronic information board to the terminal device. The terminal device retrieves the access information, and accesses the electronic information board by using the access information.

### [Advantageous Effects of Invention]

The communication system enabling a user starting to use a facility to start using an electronic information board at the same time can be provided.

### BRIEF DESCRIPTION OF THE DRAWINGS

FIG. 1 is a schematic diagram illustrating an operation of a communication system;
FIG. 2 is a schematic diagram illustrating a configuration of the communication system;
FIG. 3 is a diagram illustrating an example of a hardware configuration of a computer system;
FIG. 4 is an example of a functional block diagram illustrating each function in a WB system, a meeting reservation system, a schedule management system, a user terminal, and a terminal device, as a block;
FIG. 5A illustrates an example of a meeting room reservation screen;
FIG. 5B illustrates an example of reservation information transmitted to the meeting reservation system;
FIG. 5C illustrates an example of reservation information stored in a reservation information DB;
FIGS. 6A and 6B are of a sequence diagram illustrating an example of a sequence of procedures performed in the communication system for creating and displaying a whiteboard;
FIG. 7 illustrates an example of a reservation information confirmation screen displayed by a host terminal;
FIG. 8 illustrates an example of a check-in screen displayed by the terminal device;
FIG. 9 illustrates an example of an initial screen;
FIG. 10 illustrates an example of a termination dialog box;
FIG. 11 is a sequence diagram illustrating an example of a sequence of procedures performed in the communication system for creating and displaying a whiteboard;
FIG. 12A is a flowchart illustrating an example of a flow of a process for creating a whiteboard in response to receiving a reply to a reminder;
FIG. 12B is a flowchart illustrating an example of a flow of a process for creating a whiteboard at a time of check-in;
FIG. 12C is a flowchart illustrating an example of a flow of a process for deleting a whiteboard;
FIG. 13 is a diagram illustrating an example of a method of sharing a whiteboard URL;
FIG. 14 is an e-mail address input window which is used for registering a whiteboard URL with attendees' schedules;
FIG. 15 is an example of a functional block diagram illustrating each function in a WB system, a meeting reservation system, a schedule management system, a user terminal, and a terminal device, as a block (second embodiment);
FIG. 16 is a sequence diagram illustrating an example of a sequence of procedures performed in a communication system for creating and displaying a whiteboard (second embodiment);
FIG. 17 is a schematic diagram illustrating a configuration of a communication system (third embodiment);
FIG. 18 is a diagram illustrating an example of communication routes between systems (or terminals) in the communication system;
FIG. 19 is an example of a functional block diagram illustrating each function in a WB system, a meeting reservation system, a schedule management system, a user terminal, a meeting room terminal, and a WB terminal, as a block (third embodiment);
FIG. 20 illustrates an example of reservation information stored in the reservation information DB;
FIG. 21 is a sequence diagram illustrating an example of a sequence of procedures performed in the communication system, in which the communication system creates a whiteboard at a time of reservation, and in which the whiteboard is displayed at a time of check-in;
FIG. 22 is an example of a reservation information screen displayed on the WB terminal;
FIG. 23 is a sequence diagram illustrating an example of a sequence of procedures performed in the communication system, in which the communication system displays a new participant;
FIG. 24 is a sequence diagram illustrating another example of a sequence of procedures performed in the communication system, in which the communication system displays a new participant; and
FIG. 25 is a sequence diagram illustrating an example of a sequence of procedures performed in the communication system, in which the communication system creates a whiteboard URL at a time of check-in, and in which reservation information is displayed on a whiteboard corresponding to the whiteboard URL.

### DESCRIPTION OF THE EMBODIMENTS

In the following, as an embodiment of the present invention, a communication system and a communication method performed by the communication system will be described.

### (First Embodiment)

### <Operation Overview of Communication System>

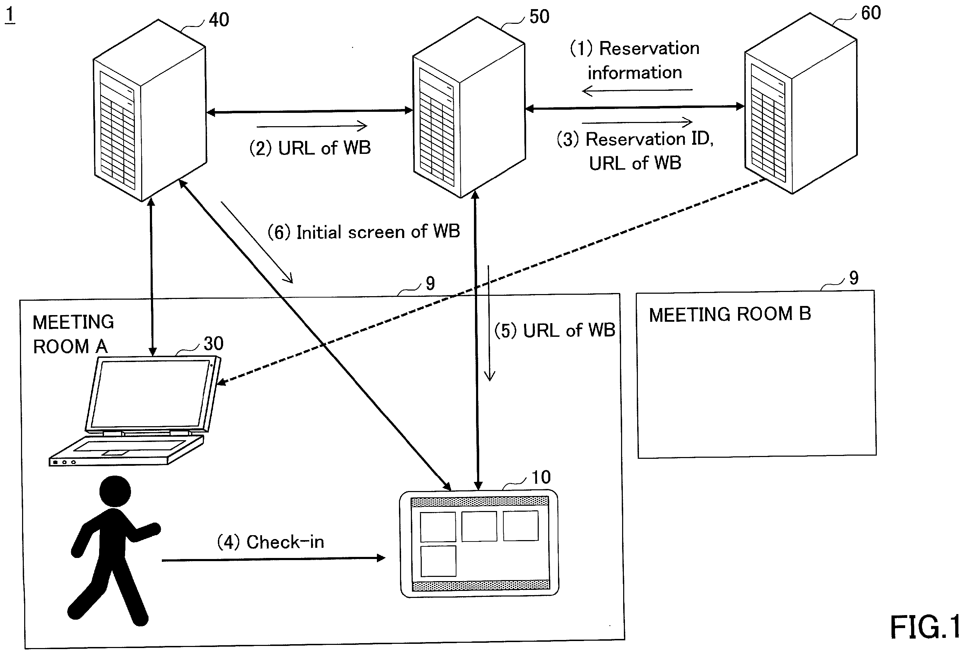

First, an overview of an operation of a communication system 1 according to a first embodiment will be described with reference to FIG. 1. FIG. 1 is a schematic diagram illustrating the operation of the communication system 1. In a meeting room 9, a terminal device 10 is provided. The terminal device 10 is communicable with a meeting reservation system 50 and a whiteboard system 40 (may also be referred to as a WB system 40) via a network. The WB system 40 is a system capable of providing an electronic whiteboard function to the terminal device 10. Further, the meeting reservation system 50 is communicable with a schedule management system 60 and the WB system 40 via the network. The schedule management system 60 is used by an attendee of a meeting to make a reservation of the meeting room 9. In FIG. 1, the two meeting rooms 9 (meeting room A and meeting room B) are illustrated, and a system configuration of the meeting room A is mainly described. However, though not illustrated, a configuration of the meeting room B is similar to that of the meeting room A.
(1) For example, the meeting reservation system 50 periodically acquires reservation information of a meeting room 9 (such as the meeting room A) from the schedule management system 60.
(2) The meeting reservation system 50 requests the WB system 40 to create a whiteboard used in a reserved meeting room, and receives an URL of the whiteboard from the WB system 40.
(3) The meeting reservation system 50 assigns a reservation ID to the acquired reservation information, and registers the reservation ID and the whiteboard URL with the schedule management system 60.
(4) An attendee performs a check-in operation by using the terminal device 10 in the meeting room 9. In response to the operation, the terminal device issues a check-in request to the meeting reservation system 50.
(5) When the terminal device 10 receives notification of success of check-in, the terminal device 10 retrieves the whiteboard URL from the meeting reservation system 50.
(6) As the terminal device 10 starts communication with the WB system 40, in which the whiteboard URL is designated as a destination of communication, an initial screen of the whiteboard is displayed on the terminal device 10.

If a terminal device 10 in the meeting room B communicates with the WB system 40, in which the whiteboard URL is designated as a destination of communication, both a person in the meeting room A and a person in the meeting room B can join the meeting, while they are looking at the same whiteboard screen. However, in the communication system 1 according to the present embodiment, it is not necessary to hold a teleconference in multiple different locations. A method of creating a whiteboard according to the present embodiment is applicable to a case in which a user wants to create a whiteboard along with a reservation of a single meeting room.

As described above, when an attendee performs a check-in operation, the terminal device 10 retrieves a URL of a whiteboard from the meeting reservation system 50, and the terminal device 10 displays an initial screen of the whiteboard by communicating with the WB system 40. Thus, the attendee can use the whiteboard only by performing the check-in operation. Further, as the whiteboard URL is registered with the schedule management system 60, the attendee can display contents of the whiteboard displayed or drawn (handwritten) on the whiteboard during the meeting, again on his/her own terminal device after the meeting.

### <Terms and Definitions>

In the present embodiment, a whiteboard refers to a function of an electronic whiteboard provided from a server to a client. That is, the word "whiteboard" does not necessarily mean a tangible electronic whiteboard apparatus. By interoperation of a server and a client, a function equivalent to the electronic whiteboard apparatus is realized at the client. Similarly, a phrase "creating a whiteboard" means that a function equivalent to the electronic whiteboard apparatus is made to be used at the client. An electronic whiteboard apparatus having a browser function can be used as a client to be used for a whiteboard. An electronic whiteboard is a device capable of receiving addition of information such as a letter, a figure, an image, a hand written image, and a stamp, to a displayed image, from a user.

A start of using facility means that use of a facility is started by a person allowed to use the facility by a reservation. In the present embodiment, a start of using facility is referred to as "check-in". A request for a start of using a facility is referred to as a check-in request.

A schedule regarding use of a facility refers to a plan indicating when and how the facility is used. Information about a schedule refers to a practical content of the schedule. Note that a schedule may also be referred to as a timetable, a calendar, or a program. In the present embodiment, information about a schedule is referred to as reservation information. Also, information about a schedule includes an event that the schedule has been registered, a reminder of the schedule, and a start (check-in) of use of a facility. A facility refers to equipment used for a certain purpose. Examples of the facility include a meeting room, a booth, and a classroom.

Information for accessing a whiteboard (access information for a whiteboard) refers to a destination of communication which the terminal device 10 or the like accesses in order to display a whiteboard (or information for identifying an access destination (whiteboard) accessed by the terminal device 10 or the like to display a whiteboard). In the present embodiment, information for accessing a whiteboard is referred to as a whiteboard URL. Information for accessing a whiteboard may also be a set of an IP address of a whiteboard and additional information such as a port number. A whiteboard is not required to be identified by only an IP address, but may be identified by a set of at least one fixed IP address and a directory name. A part or entirety of information for accessing a whiteboard may be a user ID, date and time of a meeting, a meeting room ID, a meeting name, an ID of a whiteboard, or a combination thereof.

When the terminal device 10 accesses a whiteboard URL, a whiteboard screen is displayed on the terminal device 10. By displaying a whiteboard screen, an attendee can start using the whiteboard. Note that "access" means communication and/or connection.

### <System Configuration Example>

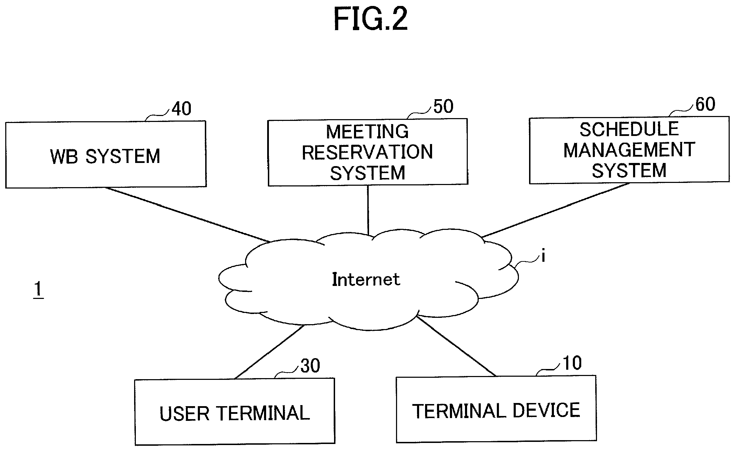

FIG. 2 is a schematic diagram illustrating a configuration of the communication system 1. The communication system 1 includes the WB system 40, the meeting reservation system 50, the schedule management system 60, a user terminal 30 (attendee terminal or host terminal), and the terminal device 10, which are interconnected via the Internet i. Note that the user terminal 30 and the terminal device 10 are disposed on an intranet such as a LAN, for example. However, the user terminal 30 may be accessible to the Internet i via a cellular network or the like, instead of the LAN.

The WB system 40, the meeting reservation system 50, and the schedule management system 60 reside in the cloud, and communicate with the user terminal 30 and the terminal device 10 via the Internet i. However, the WB system 40, the meeting reservation system 50, and the schedule management system 60 may reside in a data center or the like.

The configuration illustrated in FIG. 2 is merely an example. All of the WB system 40, the meeting reservation system 50, and the schedule management system 60 may be provided on an intranet, or at least one of the WB system 40, the meeting reservation system 50, and the schedule management system 60 may be provided on an intranet.

The schedule management system 60 is formed of, for example, one or more information processing apparatuses, which manages schedules of various users on the cloud. The schedule management system 60 supplies service for managing schedules of users. The management of schedules managed by the schedule management system 60 includes a reservation management of the meeting room 9. Examples of the service for managing schedules of users include Google Calendar (registered trademark), and Office 365 (registered trademark). Any types of systems or services can be used as the schedule management system 60, as long as they fulfil the technical specification.

The meeting reservation system 50 is formed of, for example, one or more information processing apparatuses, which manages usage and reservation information of the meeting room 9. The meeting reservation system 50 acquires, from the schedule management system 60, reservation information of the meeting room 9 managed in the schedule management system 60. The meeting reservation system 50 is not required to utilize an external schedule management system (or service), and instead, the meeting reservation system 50 may also have a function of the schedule management system 60. However, by utilizing an external schedule management system (or service) as the schedule management system 60, like the present embodiment, system development cost can be reduced.

The meeting reservation system 50 communicates with the terminal device 10 (or more than one terminal devices 10) disposed in each of the meeting rooms 9, and transmits, for example, reservation information of the day (a day when the communication between the meeting reservation system 50 and the terminal device 10 is performed) to the terminal device 10. The reservation information is updated periodically, and the meeting reservation system 50 manages, for each meeting, a status of the meeting which indicates a current state of the meeting. For example, a status of a meeting is managed during a time from a check-in through check-out.

The WB system 40 is formed of, for example, one or more information processing apparatuses, which has a function of a web server (an HTTP server) that acquires a handwritten stroke (something drawn on a screen of the terminal device 10) drawn by an attendee from the terminal device 10, and that transmits screen information including rendered data generated from one or more acquired strokes to the terminal device 10. The WB system 40 supplies service for enabling a user to use the function of a whiteboard. The screen information is written with HTML, a script language, CSS, or the like, and is supplied as a webpage generated by the WB system 40. By executing a web application, the terminal device 10 and the WB system 40 enable a user to use the terminal device 10 as an electronic whiteboard. A web application is software (or a mechanism) used on a web browser, in which a program written with a script language (such as JavaScript (registered trademark)) that runs on a web browser interoperates with a program in a web server.

In the present embodiment, a web application supplied by the WB system 40 is referred to as a whiteboard application. On every terminal device 10 on which a web browser program (software) can be executed, the whiteboard application can be used. A whiteboard or an electronic whiteboard may also be referred to as an electronic information board, a copy board, or an electronic board. A whiteboard may be of a type in which a handwritten stroke is acquired using a touch panel, or may be of a type which is formed of a projector and a conventional whiteboard (not having a display device).

The meeting reservation system 50 may include at least one of the service of the schedule management system 60 and the service of the WB system 40. The schedule management system 60 and the WB system 40 may be integrated into a single service. Further, even in a case in which the service of the meeting reservation system 50, the service of the schedule management system 60, and the service of the WB system 40 are supplied as separate services, the three services may be implemented by one or two apparatuses (information processing apparatuses). Alternatively, each of the three services may be implemented by a different apparatus. Further, one service may be implemented by two or more apparatuses.

The terminal device 10 according to the present embodiment is an information processing apparatus having three functions, a function regarding a use of a meeting room 9, a function regarding a whiteboard, and a browser function. Each of these functions is supplied, for example, by different application software. The terminal device 10 in each meeting room 9 acts as a user interface to the meeting reservation system 50. For example, the terminal device 10 acquires, from the meeting reservation system 50, reservation information with respect to a reservation of a corresponding meeting room 9, by sending identification information or the like of the corresponding meeting room 9 to the meeting reservation system 50, and displays information of a meeting to be held most recently, or displays a reservation status of the corresponding meeting room 9 of the day. The terminal device 10 displays, on its display device, information transmitted from the meeting reservation system 50, by executing an application program.

The terminal device 10 also has a function to check-in an attendee in a corresponding meeting room 9, by receiving a check-in operation at the meeting room 9 from the attendee. When the attendee performs an operation for check-in (entering a reservation ID to be described below), the terminal device 10 issues a check-in request including the reservation ID to the meeting reservation system 50. The meeting reservation system 50 performs authentication based on the check-in request. If the authentication has succeeded, the check-in is allowed.

The function regarding a whiteboard includes functions for interoperating with the browser function so that an attendee can use the terminal device 10 as a whiteboard. For example, the function regarding a whiteboard includes a function for receiving a user operation and a function to cause a browser to communicate with the WB system 40.

As the terminal device 10 also includes the browser (web browser), a web page transmitted from a typical web server can be displayed, and a web application can be executed by the browser. The screen information transmitted from the WB system 40 is displayed by the browser.

The terminal device 10 may be a general purpose information processing apparatus, such as a smartphone, a tablet device, and a laptop PC (Personal Computer). The terminal device 10 may be an information processing apparatus including a communication function, displaying function, and an input function. The terminal device 10 may also be an electronic whiteboard, a video conference terminal, a projector, or a combination thereof.

The user terminal 30 is an information processing apparatus that a user of the communication system 1 carries into a meeting room 9. However, the user terminal 30 is not necessarily carried into a meeting room 9. A user mentioned here refers to an attendee. Also, there are two types of attendees, a person hosting a meeting (a meeting host), and a person simply attending a meeting (a simple participant, which may also be referred to as a meeting participant). A meeting host refers to a person who made a reservation of a meeting. However, in the present embodiment, a meeting host and a simple participant may not be distinguished exactly. Note that, in the present embodiment, a user terminal 30 used by a meeting host may be referred to as a host terminal, and a user terminal 30 used by a simple participant may be referred to as a participant terminal.

The user terminal 30 may be a general purpose information processing apparatus, such as a smartphone, a tablet device, and a laptop PC. In the present embodiment, the user terminal 30 may be an information processing apparatus on which a browser runs.

### <Example of Hardware Configuration>

Next, hardware configurations of the WB system 40, the meeting reservation system 50, the schedule management system 60, the user terminal 30, and the terminal device 10 in the communication system 1 according to the present embodiment will be described.

### << Example of Hardware Configurations of WB system, Meeting Reservation System, Schedule Management System, User Terminal, and Terminal Device>>

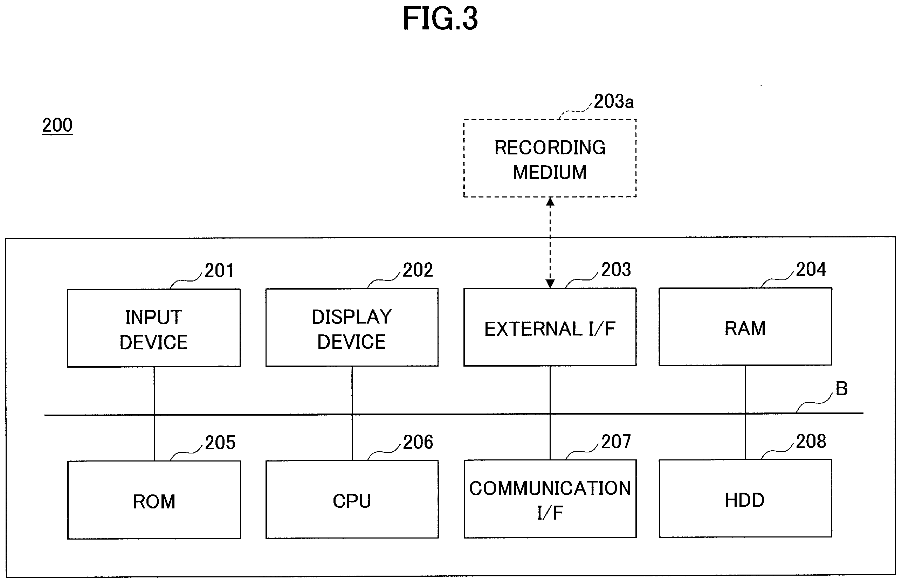

Each of the WB system 40, the meeting reservation system 50, the schedule management system 60, the user terminal 30, and the terminal device 10 is implemented by a computer system having a hardware configuration illustrated in FIG. 3, for example. FIG. 3 is a diagram illustrating an example of a hardware configuration of a computer system 200 according to the present embodiment.

The computer system 200 illustrated in FIG. 3 includes an input device 201, a display device 202, an external I/F 203, a RAM (Random Access Memory) 204, a ROM (Read Only Memory) 205, a CPU (Central Processing Unit) 206, a communication I/F 207, an HDD (Hard Disk Drive) 208, and the like, which are interconnected via a bus B.

The input device 201 includes a keyboard, a mouse, a touch panel, and the like. The input device 201 is used when a user inputs various operation signals. The display device 202 includes a display monitor, and is used for displaying a result of a process performed by the computer system 200.

The communication I/F 207 is an interface for connecting the computer system 200 to an intranet or the Internet. The computer system 200 can perform data communication via the communication I/F 207.

The HDD 208 is a non-volatile storage device storing a program and data. In the programs or data stored in the HDD 208, an OS (Operating System) which is basic software for controlling the entire computer system 200, an application program which works on the OS and provides various functions, and the like, are included. The programs or data stored in the HDD 208 are managed by a given filesystem or a DB (database).

The external I/F 203 is an interface with an external device. An example of the external device includes a recording medium 203a. The computer system 200 can read or write data from/to the recording medium 203a via the external I/F 203. Examples of the recording medium 203a include a flexible disk, a CD (Compact Disc), a DVD (Digital Versatile Disc), an SD memory card, and a USB (Universal Serial Bus) memory.

The ROM 205 is a non-volatile semiconductor memory (storage device) which can retain a program and data even when power is turned-off. In the ROM 205, programs and data such as BIOS (Basic Input/Output System) which is executed when the computer system 200 boots up, OS setting information, network setting information, and the like, are stored. The RAM 204 is a volatile semiconductor memory (storage device) for temporarily storing a program or data.

The CPU 206 is a processing unit which performs overall control of the computer system 200 and which embodies various functions of the computer system 200, by loading a program or data stored in the storage device such as the ROM 205 or the HDD 208 into the RAM 204, and performing processing.

The WB system 40, the meeting reservation system 50, and the schedule management system 60 may preferably be adapted to a cloud computing environment. A cloud computing environment refers to an environment in which resources on a network can be utilized without considering a specific hardware resource.

### <Functional Blocks>

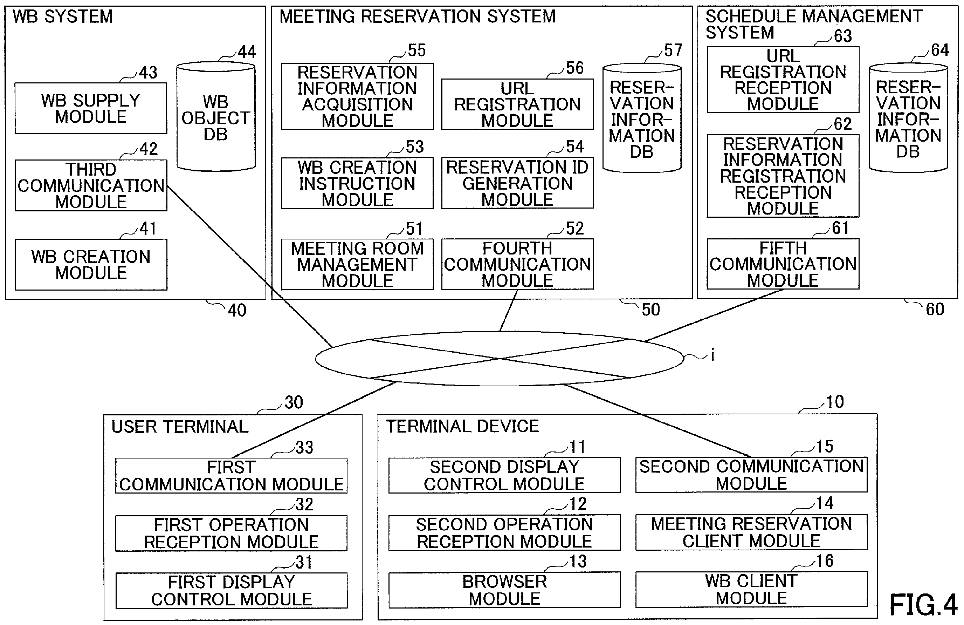

Next, functions of the WB system 40, the meeting reservation system 50, the schedule management system 60, the user terminal 30, and the terminal device 10 will be described. FIG. 4 is an example of a functional block diagram illustrating each functional unit (module) in the WB system 40, the meeting reservation system 50, the schedule management system 60, the user terminal 30, and the terminal device 10, as a block.

### <<Functions of User Terminal>>

The user terminal 30 includes a first display control module 31, a first operation reception module 32, and a first communication module 33. Each of the above functional units (modules) in the user terminal 30 is embodied by at least one of the hardware elements in FIG. 3 being operated by instructions from the CPU 206 that is operated in accordance with a program loaded from the HDD 208 onto the RAM 204. The program is distributed from a server for distributing a program, or is distributed in a manner stored in a non-volatile (non-transitory) recording medium.

The first communication module 33 transmits various types of information mainly to the schedule management system 60 and the WB system 40, and receives various types of information mainly from the schedule management system 60 and the WB system 40. In the present embodiment, the first communication module 33 registers reservation information of a meeting room 9 with the schedule management system 60, and retrieves a whiteboard URL from the schedule management system 60. The first communication module 33 also communicates with the WB system 40 by designating a whiteboard URL, to receive screen information including rendered data.

The first display control module 31 displays various screen images on the display device 202. For example, by analyzing screen information received by the first communication module 33, the first display control module 31 displays, on the display device 202, a reservation screen and a webpage used as a whiteboard.

The first operation reception module 32 receives various types of user operations to the user terminal 30. For example, a pressing operation of a button displayed on a menu, an input operation of a letter and the like, a screen scrolling operation, and the like, are received by the first operation reception module 32.

With respect to the above described functions of the user terminal 30, a browser program residing in the user terminal 30 may provide these functions by analyzing screen information transmitted from the schedule management system 60 or the WB system 40.

### <<Functions of WB System>>

The WB system 40 includes a WB creation module 41, a third communication module 42, and a WB supply module 43. Each of the above functional units (modules) in the WB system 40 is embodied by at least one of the hardware elements in FIG. 3 being operated by instructions from the CPU 206 that is operated in accordance with a program loaded from the HDD 208 onto the RAM 204. The program is distributed from a server for distributing a program, or is distributed in a manner stored in a non-volatile (non-transitory) recording medium. The WB system 40 also includes a WB object DB 44 retained in the RAM 204 or the HDD 208.

The third communication module 42 transmits various types of information mainly to the meeting reservation system 50 and the terminal device 10, and receives various types of information mainly from the meeting reservation system 50 and the terminal device 10. In the present embodiment, when the third communication module 42 receives a request for creating a whiteboard from the meeting reservation system 50, the WB system 40 returns a whiteboard URL. Also, when the third communication module 42 receives coordinate data forming a stroke from the terminal device 10, the WB system 40 supplies screen information of a whiteboard including rendered data generated from the stroke.

The WB creation module 41 creates a whiteboard. For example, when a request for creating a whiteboard is received from the meeting reservation system 50, the WB creation module 41 creates a corresponding whiteboard. In the following description, a case in which one URL corresponds to one whiteboard will be described in order to make the description easier. In this case, when a new whiteboard is created, a new URL is assigned to the created whiteboard. Creating a whiteboard refers to a process of preparing screen information (may also be referred to as a web application) having functions for receiving an input of a stroke, providing rendering data, and the like. A template of such screen information is prepared in advance, and the WB creation module 41 creates a copy of the template and assigns a whiteboard URL with the created copy.

The WB supply module 43 generates screen information for a whiteboard. The WB supply module 43 maintains, for each whiteboard, data to be displayed on a corresponding white board. For example, the data to be displayed on a whiteboard includes rendered data composed of one or more strokes, a text, a menu, and image data pasted on the whiteboard. Such contents (such as rendered data, a text, a menu, and image data) and corresponding display locations are managed in the WB object DB 44 for each whiteboard.

The WB supply module 43 generates screen information using managed objects. In a case in which multiple strokes are overlapping with each other, the WB supply module 43 generates rendered data by combining the multiple strokes into a single object. By performing the above procedure, quality of an image improves even when the image is magnified, reduced, or rotated.

Canvas element, which is a part of HTML, is a preferable element for supplying a whiteboard as image information. The canvas element is used when rendering a figure or the like using a script language such as JavaScript (registered trademark). Every time data such as handwritten data is added, the WB supply module 43 updates screen information.

When the screen information is updated during a teleconference, the third communication module 42 sends a notification indicating that the screen information has been updated, to each terminal device 10 connecting to a whiteboard URL. As the terminal device 10 having received the notification accesses the whiteboard URL to retrieve the screen information, data displayed on the whiteboard can be shared by each of the terminal devices 10 in almost real time.

### <<Functions of Schedule Management System>>

The schedule management system 60 includes a fifth communication module 61, a reservation information registration reception module 62, and an URL registration reception module 63. Each of the above functional units (modules) in the schedule management system 60 is embodied by at least one of the hardware elements in FIG. 3 being operated by instructions from the CPU 206 that is operated in accordance with a program loaded from the HDD 208 onto the RAM 204. The program is distributed from a server for distributing a program, or is distributed in a manner stored in a non-volatile (non-transitory) recording medium. The schedule management system 60 also includes a reservation information DB 64 retained in the HDD 208 or the RAM 204.

The fifth communication module 61 transmits various types of information mainly to the user terminal 30 and the meeting reservation system 50, and receives various types of information mainly from the user terminal 30 and the meeting reservation system 50. In the present embodiment, the fifth communication module 61 receives reservation information regarding a reservation of a meeting room 9 from the user terminal 30, and transmits the reservation information to the meeting reservation system 50.

The reservation information registration reception module 62 acquires reservation information regarding a reservation of a meeting room 9 from the user terminal 30, and registers the reservation information with the reservation information DB 64. The URL registration reception module 63 receives a whiteboard URL from the meeting reservation system 50, and registers the whiteboard URL by associating with the reservation information.

### <<Functions of Meeting Reservation System>>

The meeting reservation system 50 includes a meeting room management module 51, a fourth communication module 52, a WB creation instruction module 53, a reservation ID generation module 54, a reservation information acquisition module 55, and an URL registration module 56. Each of the above functional units (modules) in the meeting reservation system 50 is embodied by at least one of the hardware elements in FIG. 3 being operated by instructions from the CPU 206 that is operated in accordance with a program loaded from the HDD 208 onto the RAM 204. The program is distributed from a server for distributing a program, or is distributed in a manner stored in a non-volatile (non-transitory) recording medium. The meeting reservation system 50 also includes a reservation information DB 57 retained in the HDD 208 or the RAM 204.

The fourth communication module 52 transmits various types of information mainly to the terminal device 10, the schedule management system 60, and the WB system 40, and receives various types of information mainly from the terminal device 10, the schedule management system 60, and the WB system 40. In the present embodiment, the fourth communication module 52 transmits at least reservation information of the day to the terminal device 10, and receives a check-in request from the terminal device 10. The fourth communication module 52 also acquires a whiteboard URL from the WB system 40, and transmits the whiteboard URL to the schedule management system 60.

The reservation information acquisition module 55 acquires reservation information from the schedule management system 60. As the schedule management system 60 maintains reservation information of various companies, the reservation information acquisition module 55 logs in to the schedule management system 60 using an account (a set of a user name and a password) registered for each company in advance, and acquires reservation information registered in association with a domain name contained in the account. For example, in a case in which a user name of an account registered in the schedule management system 60 is a@xfood.com, the reservation information acquisition module 55 acquires reservation information of an account "xxx@xfood.com" (xxx is an arbitrary character string).

When new reservation information is registered with the schedule management system 60, the reservation information acquisition module 55 receives a notification. Thus, in response to receiving the notification, the reservation information acquisition module 55 acquires the reservation information from the schedule management system 60. Alternatively, the reservation information acquisition module 55 may periodically (at a predetermined frequency such as once per hour) acquire reservation information from the schedule management system 60.

The reservation information acquired by the reservation information acquisition module 55 is stored in the reservation information DB 57. Details of the reservation information will be described below. Further, in the present embodiment, the reservation information DB 64 in the schedule management system 60 and the reservation information DB 57 in the meeting reservation system 50 are not distinguished. Although, in an actual configuration, contents in the reservation information DB 64 and the reservation information DB 57 may differ, for example, with respect to management information of the reservation information, it does not affect the description of the present embodiment.

The reservation ID generation module 54 generates a unique reservation ID with respect to reservation information acquired by the reservation information acquisition module 55. The reservation ID is also set to reservation information in the schedule management system 60. Accordingly, the user terminal 30 can check the reservation ID by communicating with the schedule management system 60. A meeting host or a meeting participant (either one of them) performs a check-in operation using the reservation ID.

When a check-in request is received from the terminal device 10, the meeting room management module 51 authenticates an attendee based on the reservation ID or the like, to determine whether the check-in request is allowed or not (whether or not use of a meeting room is allowed). If it is determined that the check-in is allowed, a status of the reservation information in the reservation information DB 57 is changed to a checked-in state. The status may take, for example, the following states: "check-in prohibited", "check-in allowed", "checked-in", and the like.

The WB creation instruction module 53 requests the WB system 40 to create a whiteboard. Creation of a whiteboard may be performed from a time when reservation information is registered to a time when a meeting is finished. When a whiteboard is created, the WB creation instruction module 53 acquires a corresponding whiteboard URL from the WB system 40.

The URL registration module 56 transmits a whiteboard URL acquired by the WB creation instruction module 53 to the schedule management system 60, and causes the schedule management system 60 to register the whiteboard URL by associating the whiteboard URL with corresponding reservation information.

### <<Functions of Terminal Device>>

The terminal device 10 includes a second display control module 11, a second operation reception module 12, a browser module 13, a meeting reservation client module 14, a second communication module 15, and a WB client module 16. Each of the above functional units (modules) in the terminal device 10 is embodied by at least one of the hardware elements in FIG. 3 being operated by instructions from the CPU 206 that is operated in accordance with a program loaded from the HDD 208 onto the RAM 204. The program is distributed from a server for distributing a program, or is distributed in a manner stored in a non-volatile (non-transitory) recording medium.

The second communication module 15 transmits various types of information mainly to the meeting reservation system 50 and the WB system 40, and receives various types of information mainly from the meeting reservation system 50 and the WB system 40. In the present embodiment, the terminal device 10 (such as the second communication module 15) issues, to the meeting reservation system 50, a request for acquiring reservation information of a meeting room 9 (may be referred to as a corresponding meeting room 9) in which the terminal device 10 is provided, by designating identification information or the like of the corresponding meeting room 9, and receives the reservation information. The second communication module 15 also retrieves screen information of a whiteboard from the WB system 40.

The second display control module 11 displays various screen images on the display device 202. For example, the second display control module 11 displays reservation information received by the second communication module 15. Further, for example, by analyzing screen information of a whiteboard, the second display control module 11 displays a webpage functioning as a whiteboard on the display device 202.

The second operation reception module 12 receives various types of user operations that are made to the terminal device 10. For example, a check-in operation (input of a reservation ID), a check-out operation, and the like, are received by the second operation reception module 12.

The meeting reservation client module 14 is a client application of the meeting reservation system 50. The meeting reservation client module 14 sends a request of check-in or check-out to the meeting reservation system 50 via the second communication module 15.

The WB client module 16 mediates between the meeting reservation client module 14 and the browser module 13. In response to an operation by a user to use a whiteboard, the WB client module 16 requests the meeting reservation client module 14 to acquire a whiteboard URL, and sends the acquired whiteboard URL to the browser module 13.

The browser module 13 has functions similar to a generic web browser. The browser module 13 communicates with the WB system 40 by using a whiteboard URL as a destination of communication, to cause the terminal device 10 to function as a whiteboard.

### <Registration of Reservation Information>

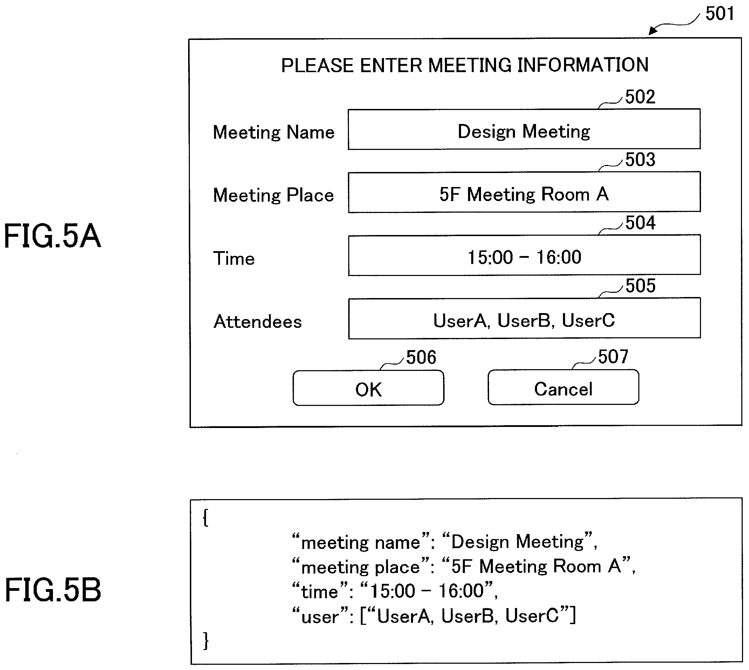

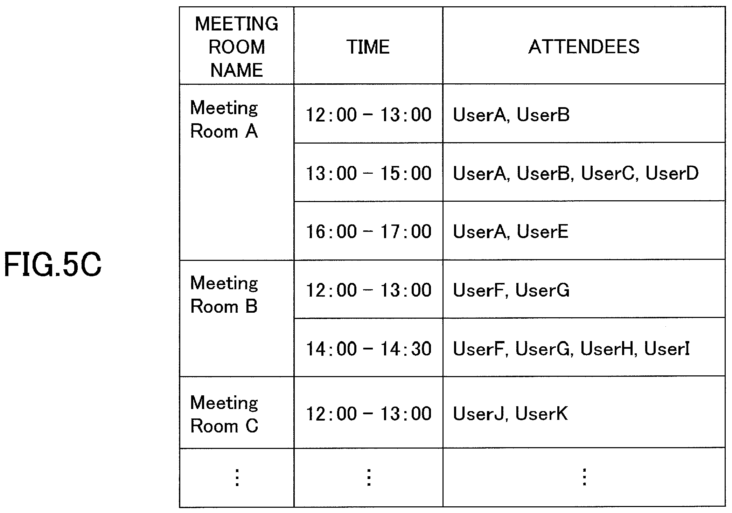

A method of reserving a meeting room 9, and contents of reservation information will be described with reference to FIGS. 5A, 5B, and 5C. FIG. 5A illustrates an example of a meeting room reservation screen 501, FIG. 5B illustrates an example of reservation information transmitted to the meeting reservation system 50, and FIG. 5C illustrates an example of reservation information stored in the reservation information DB 57.

As illustrated in FIG. 5A, the meeting room reservation screen 501 includes a meeting name field 502, a place field 503, a time field 504, an attendee field 505, an OK button 506, and a cancel button 507. In the meeting name field 502, a name or title of a meeting, an agenda, or the like, is set. In the place field 503, a name or the like of a meeting room 9 is set. As a list of meeting rooms 9 allowed to be used is registered on a per-company basis with the schedule management system 60 in advance, a meeting host may set a name of a meeting room 9 to be used by selecting from the list. In the time field 504, a start time and an end time of a meeting to be held in a meeting room 9 to be reserved are set. Date of the meeting may also be entered in the time field 504, although illustration of date information is omitted in FIG. 5A. In the attendee field 505, names of attendees of the meeting are set.

Information entered in each of the fields (reservation information) is transmitted and/or received in the communication system 1, in a character string format, as illustrated in FIG. 5B. FIG. 5B illustrates a case in which the reservation information is described in JSON format. However, other types of data formats, such as XML or CSV, may be used.

When a reservation of a meeting room 9 using the meeting room reservation screen 501 has been made, the reservation information is registered with the schedule management system 60 and the meeting reservation system 50, as illustrated in FIG. 5C. In the example of FIG. 5C, time of a meeting and attendee names are registered, in association with a name of a meeting room. Actually, in the reservation information, other information such as a status of a meeting room 9 is also included. However, illustration of the other information is omitted in FIG. 5C.

### <Flow of Operation>

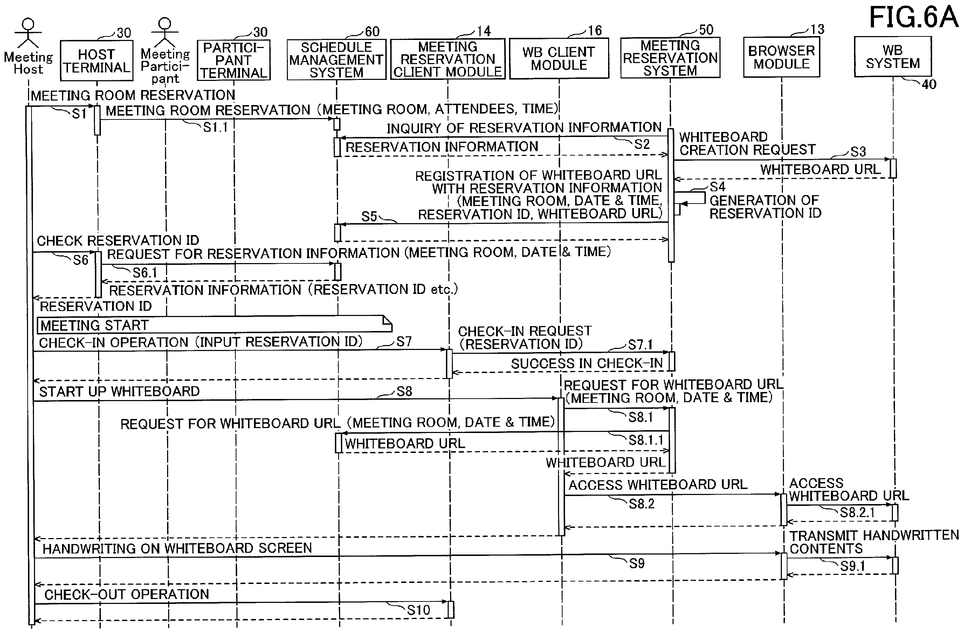

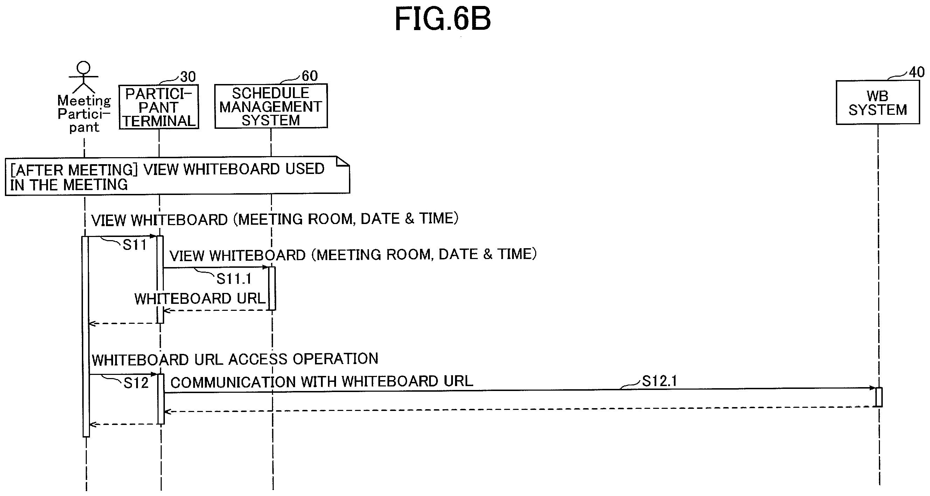

Next, a process of creating a whiteboard in the communication system 1 will be described with reference to FIGS. 6A and 6B. FIGS. 6A and 6B are of a sequence diagram illustrating an example of a sequence of procedures performed in the communication system 1 for creating and displaying a whiteboard.

S1: By operating a host terminal, a meeting host causes the host terminal to communicate with the schedule management system 60, and the meeting host inputs, to the host terminal, an instruction to reserve a meeting room 9. The meeting host also inputs, to the host terminal, an instruction to create a new whiteboard. However, if a new whiteboard is automatically created in conjunction with the reservation of the meeting room 9, the meeting host does not need to input an instruction to create a new whiteboard.

S1.1: When the operation performed by the meeting host is received by the first operation reception module 32 in the host terminal, the first communication module 33 in the host terminal transmits information necessary for reserving the meeting room 9, to the schedule management system 60. Specifically, as described above with reference to FIGS. 5A to 5C, the information to be transmitted includes a name of the meeting room 9, names of attendees, and a time (a start time and an end time of a meeting. Date may also be included). Hereinafter, a name of the meeting room 9 may also be referred to as a "meeting room name". Further, a request for creating a whiteboard is included in the information. The fifth communication module 61 in the schedule management system 60 receives the above described information, and the reservation information registration reception module 62 registers the reservation information with the reservation information DB 64.

S2: The reservation information acquisition module 55 in the meeting reservation system 50 inquires of the schedule management system 60 if there is new reservation information. The inquiry may be performed periodically with polling, for example. In response to the inquiry, the reservation information acquisition module 55 receives reservation information.

S3: As the received reservation information includes a request for creating a whiteboard, the WB creation instruction module 53 in the meeting reservation system 50 issues a request for creating a whiteboard to the WB system 40. When the third communication module 42 in the WB system 40 receives the request for creating a whiteboard, the WB creation module 41 creates a new whiteboard, and associates a new whiteboard URL with the new whiteboard. The third communication module 42 transmits the whiteboard URL to the meeting reservation system 50. Note that the whiteboard URL may be sent to each attendee via an e-mail.

S4: The fourth communication module 52 in the meeting reservation system 50 receives the whiteboard URL. Further, the reservation ID generation module 54 generates a reservation ID (assigns a number). Note that the reservation ID may be generated when receiving the reservation information.

S5: As the meeting reservation system 50 has received the whiteboard URL, the URL registration module 56 in the meeting reservation system 50 issues a request for registering the whiteboard URL and the reservation ID to the schedule management system 60, by designating the name of the meeting room 9 (meeting room name) and a time (date and time). However, instead of designating the meeting room name and the date and time, other identification information capable of uniquely identifying a reservation event of the meeting room 9 may be designated. By performing this step (S5), the whiteboard URL is registered with the schedule management system 60. Thus, information regarding the meeting can be centrally managed.

In a case in which the meeting reservation system 50 also serves as the schedule management system 60, the WB creation instruction module 53 requests the WB system 40 to create a whiteboard at a time when reservation information is registered with the meeting reservation system 50 (the schedule management system 60) at step S1.1.

S6: As described above, since the whiteboard URL and the reservation ID have been registered in the schedule management system 60, the meeting host can check the reservation ID required for check-in. On the host terminal, the meeting host performs an operation for seeing the reservation information by designating the meeting room name and the date and time.

S6.1: When the first operation reception module 32 in the host terminal receives the operation of designating the meeting room name and the date and time performed by the meeting host, the first communication module 33 issues a request for acquiring reservation information to the schedule management system 60, by designating the meeting room name and the date and time. When the fifth communication module 61 in the schedule management system 60 receives the request (with the meeting room name and the date and time), the schedule management system 60 acquires reservation information identified by the received meeting room name and the received date and time, and transmits the acquired reservation information to the host terminal.

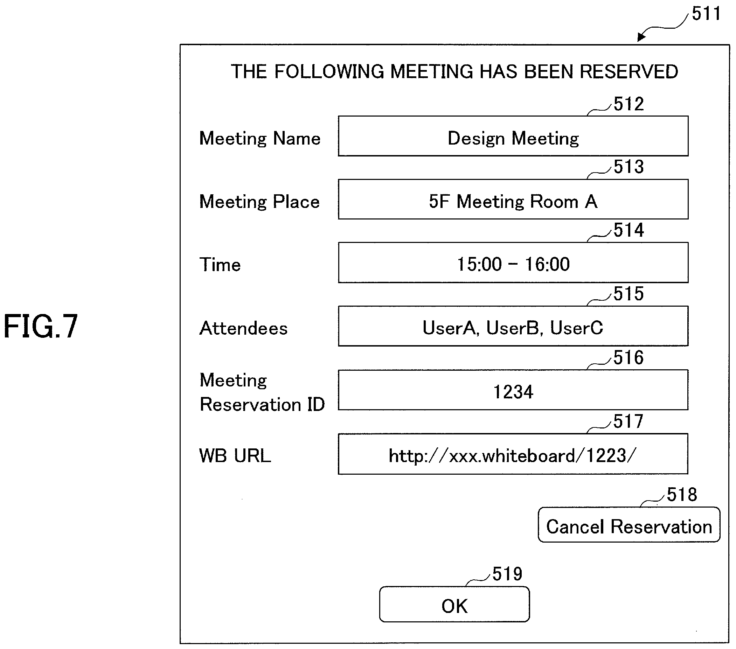

When the first communication module 33 in the host terminal receives the reservation information, the first display control module 31 displays the reservation information on the display device 202. An example of the displayed reservation information is illustrated in FIG. 7. By the reservation information being displayed, the meeting host can recognize a reservation ID of the meeting room 9 and a whiteboard URL to be used in the meeting.

Next, a process performed when a meeting is started will be described.

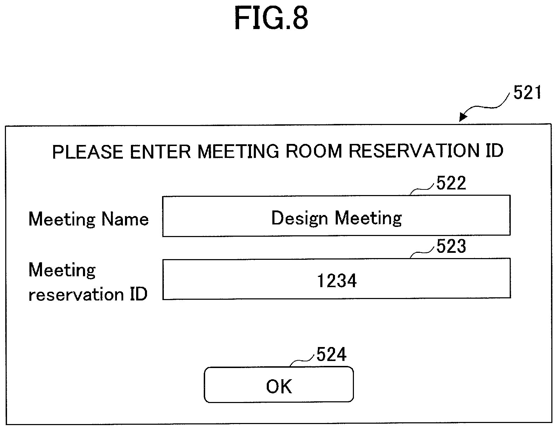

S7: The meeting host visits the meeting room 9, and performs a check-in operation (inputting the reservation ID obtained at S6 and S6.1) on the terminal device 10. The check-in operation can also be performed by a meeting participant. An example of a check-in screen is illustrated in FIG. 8.

S7.1: When the second operation reception module 12 in the terminal device 10 receives an operation required for check-in (input of the reservation ID), the meeting reservation client module 14 in the terminal device 10 transmits, to the meeting reservation system 50, a check-in request including the meeting room name, the date and time, and the reservation ID. When the fourth communication module 52 in the meeting reservation system 50 receives the check-in request, the meeting room management module 51 determines whether the check-in succeeds or not (whether the check-in is allowed or not). That is, the meeting room management module 51 determines whether reservation information including a set of the meeting room name, the date and time, and the reservation ID received from the terminal device 10 is maintained in the meeting room management module 51 or not. In the following description, a case in which the check-in has succeeded and in which a notification of success of check-in is returned to the terminal device will be described. FIGS. 6A and 6B also illustrate the case in which the check-in has succeeded. Note that the determination may be performed based on information other than the meeting room name and the date and time. Any identification information capable of uniquely identifying a reservation event of the meeting room 9 may be used for the determination. This is applicable to other processes to be described below.

S8: The meeting host presses an icon for starting up a whiteboard. When the icon is pressed, following steps (steps S8.1 to S8.2.1) will be executed. The icon is displayed on the terminal device 10 when the check-in has succeeded. In another embodiment, execution of the following steps may be started in response to success of check-in.

S8.1: When the second operation reception module 12 in the terminal device 10 receives an instruction (an icon pressing operation at step S8) of starting a whiteboard, the WB client module 16 issues a request for acquiring a whiteboard URL by designating a meeting room name and date and time of a meeting in which check-in is allowed.

The request for acquiring a whiteboard URL may be issued directly from the terminal device 10 to the meeting reservation system 50, like the step S8.1 described above. In another embodiment, a whiteboard URL may be acquired by performing the following procedures. First, when the terminal device 10 issues a check-in request to the meeting reservation system 50 at step S7.1, the meeting reservation system 50 returns a whiteboard URL obtained from the schedule management system 60 to the terminal device 10, with a notification of success of check-in. The terminal device 10 retains the received whiteboard URL in its storage device (RAM 204 or HDD 208). Note that the meeting reservation system 50 may obtain a whiteboard URL from the schedule management system 60 in advance, or may obtain a whiteboard URL at a time of receiving a check-in request from the terminal device 10. Next, when the terminal device 10 receives a request for starting a whiteboard (an icon pressing operation), the terminal device 10 starts the whiteboard by using the whiteboard URL stored in its storage device.

S8.1.1: When the fourth communication module 52 in the meeting reservation system 50 receives the request for acquiring a whiteboard URL, the reservation information acquisition module 55 issues a request for acquiring a whiteboard URL to the schedule management system 60, by designating a meeting room name and date and time of the meeting.

When the fifth communication module 61 in the schedule management system 60 receives the request for acquiring a whiteboard URL (with the meeting room name and the date and time), the schedule management system 60 acquires a whiteboard URL in corresponding reservation information identified by the received meeting room name and the received date and time, and transmits the acquired whiteboard URL to the meeting reservation system 50. The fourth communication module 52 in the meeting reservation system 50 receives the whiteboard URL, and transmits the whiteboard URL to the terminal device 10.

In the above description, a case in which the meeting reservation system 50 acquires a whiteboard URL from the schedule management system 60 at step S8.1 is described. In another embodiment, the meeting reservation system 50 may acquire and retain a whiteboard URL at step S7.1, and may transmit the whiteboard URL to the terminal device 10 at step S8.1. In a case in which the meeting reservation system 50 acquires a whiteboard URL from the schedule management system 60 at step S8.1, the meeting reservation system 50 does not need to retain a whiteboard URL. Conversely, in a case in which the meeting reservation system 50 acquires and retains a whiteboard URL at step S7.1, a latency caused by communications can be reduced.

S8.2: When the second communication module 15 in the terminal device 10 receives the whiteboard URL, the WB client module 16 transmits the whiteboard URL to the browser module 13.

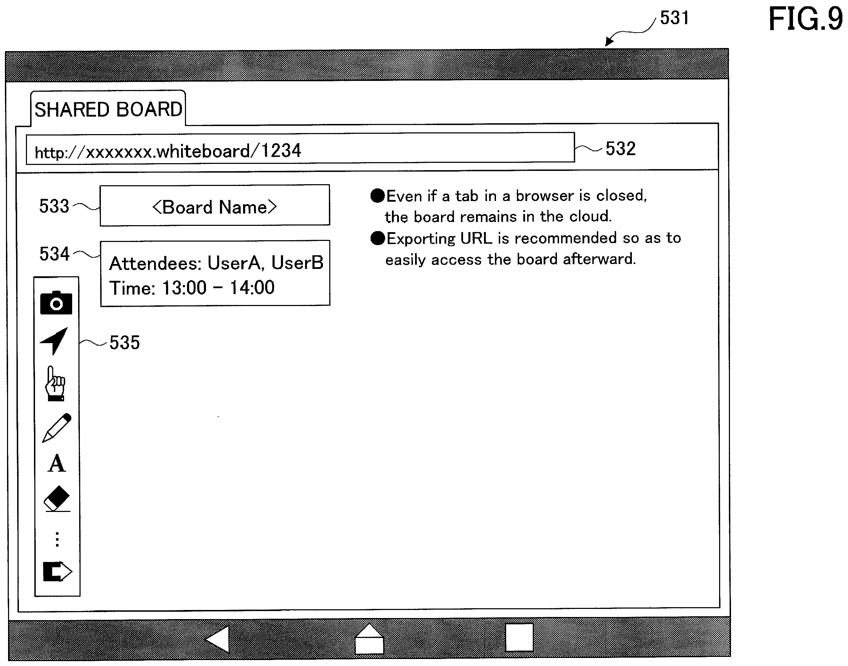

S8.2.1: The browser module 13 accesses the whiteboard URL (the WB system 40). By performing this step, the browser module 13 in the terminal device 10 can display the whiteboard created at step S3. An example of an initial screen of a whiteboard is illustrated in FIG. 9.

S9: The meeting host can perform handwriting on a screen of the whiteboard displayed by the browser module 13.

S9.1: When the second operation reception module 12 in the terminal device 10 receives a handwriting operation, the WB client module 16 transmits the handwritten contents to the WB system 40.

S10: When the meeting is over, the meeting host performs a check-out operation on the terminal device 10. Note that a meeting participant can also perform the check-out operation. When the second operation reception module 12 in the terminal device 10 receives the check-out operation, the meeting reservation client module 14 sends a notification to the meeting reservation system 50 that the check-out is performed.

Next, a process performed when a meeting participant views the whiteboard after the meeting will be described.

S11: The meeting participant performs an operation for viewing the whiteboard (inputting the meeting room name and the date and time) on the participant terminal.

S11.1: When the first operation reception module 32 in the participant terminal receives the operation, the first communication module 33 issues a request for viewing the whiteboard to the schedule management system 60, by designating the meeting room name and the date and time. As the whiteboard URL has been registered with the reservation information managed by the schedule management system 60, the fifth communication module 61 in the schedule management system 60 transmits the whiteboard URL to the participant terminal. Accordingly, the meeting participant can recognize the whiteboard URL. A screen displayed on the participant terminal at step S11.1 may be the same as that illustrated in FIG. 7. Although the example of the screen in FIG. 7 is for confirming reservation information, information registered in the reservation information DB 64 (or 57) is similar to that after the meeting.

S12: The meeting participant performs an operation for accessing the whiteboard URL.

S12.1: When the first operation reception module 32 in the participant terminal receives the operation, the first communication module 33 communicates with the WB system 40 by using a whiteboard URL as a destination of communication. The WB supply module 43 in the WB system 40 identifies an object based on the whiteboard URL, generates screen information using the objects, and transmits the screen information to the participant terminal. As described above, in the present embodiment, as a whiteboard URL is registered with the schedule management system 60, a meeting participant can display information rendered on a whiteboard, after a meeting.

The sequence diagram in FIGS. 6A and 6B illustrates a case in which a whiteboard is displayed on the terminal device 10. However, instead of the terminal device 10 that receives a check-in operation, other devices in a meeting room 9 (such as an electronic whiteboard or other display devices) may display a whiteboard (access the WB system 40), by receiving a whiteboard URL from the terminal device 10.

### <Display Examples>

### <<Reservation Information including Reservation ID and Whiteboard URL>>

FIG. 7 illustrates an example of a reservation information confirmation screen 511 displayed by the host terminal at step S6.1 in FIG. 6A. In the following, differences between FIG. 5A and FIG. 7 are mainly described. A meeting name field 512, a place field 513, a time field 514, and an attendee field 515 are similar to the meeting name field 502, the place field 503, the time field 504, and the attendee field 505 in FIG. 5A, respectively.

As a reservation ID and a whiteboard URL have already been registered with the schedule management system 60 when step S6.1 is performed, the reservation information confirmation screen 511 includes a reservation ID field 516 and a whiteboard URL field 517. Thus, the meeting host and the like can obtain a reservation ID and a whiteboard URL from the schedule management system 60.

The reservation information confirmation screen 511 also includes a button for cancelling reservation (may be referred to as a "cancel reservation button 518"). When the cancel reservation button 518 is pressed, the schedule management system 60 deletes reservation information (displayed on the screen 511). Also, that the reservation information has been deleted is reported to the meeting reservation system 50. After the meeting host has finished confirming the reservation information, the meeting host may press an OK button 519.

### <<Check-in Screen>>

FIG. 8 illustrates an example of a check-in screen 521 displayed by the terminal device 10 at step S7 in FIG. 6A. The check-in screen 521 is a standby screen waiting for a check-in request for a meeting to be held immediately after a current time. For example, the check-in screen 521 includes a meeting name field 522 and a reservation ID input field 523. When a meeting host visits a meeting room 9, the meeting host confirms a name of the meeting by seeing the check-in screen 521 and inputs a corresponding reservation ID of the meeting onto the reservation ID input field 523. When an OK button 524 is pressed, the terminal device 10 issues a check-in request including the reservation ID to the meeting reservation system 50.

### <<Initial Screen of Whiteboard>>

FIG. 9 illustrates an example of an initial screen 531 displayed at step S8.2 in FIG. 6A. The initial screen 531 includes a URL display field 532, a board name field 533, a reservation information field 534, and a menu field 535. On the URL display field 532, a whiteboard URL is displayed. On the board name field 533, a user (such as an attendee) can freely input information (such as a name of a meeting). On the reservation information field 534, for example, names of attendees and time of a meeting are displayed. Information to be displayed on the reservation information field 534 may be transmitted to the WB system 40 from the terminal device 10 or the meeting reservation system 50, at a time when step S3 or step S8.2.1 is performed. The menu field 535 includes at least one button used by a user for controlling a color of a stroke or a thickness of a stroke.

A user such as an attendee of a meeting can freely perform handwriting on the initial screen 531 described above, and the user can discuss with another attendee of the meeting (who joins the meeting at another location, for example), while viewing the same information as each other.

### <<Termination Dialog Box of Whiteboard>>

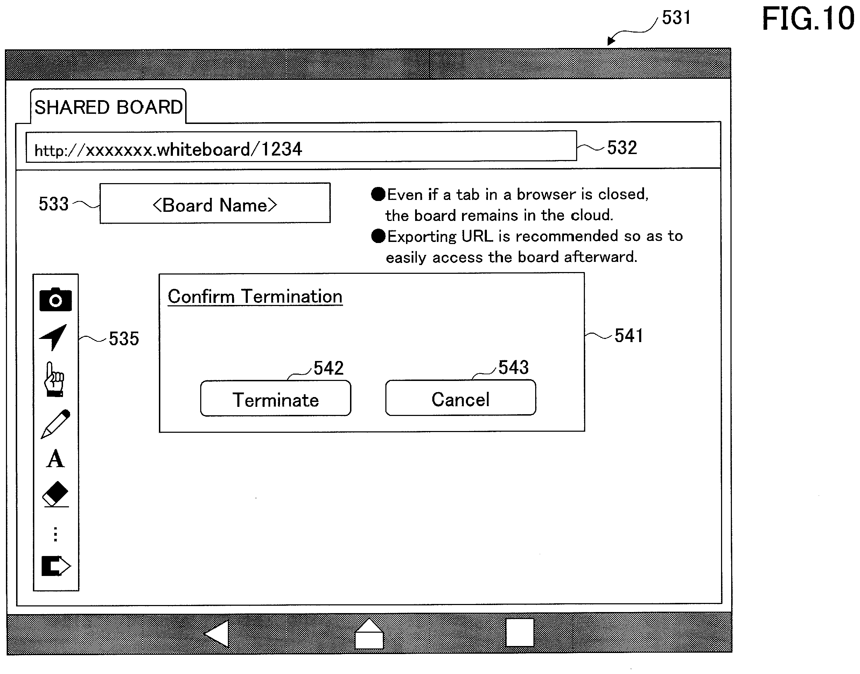

FIG. 10 illustrates an example of a termination dialog box 541. In the following, differences between FIG. 9 and FIG. 10 are mainly described. When an attendee of a meeting presses a given button for terminating a whiteboard, the second operation reception module 12 detects an event in which the given button has been pressed, and the WB client module 16 causes the second display control module 11 to pop-up the termination dialog box 541. The termination dialog box 541 includes a terminate button 542 and a cancel button 543.

When an attendee presses the terminate button 542, the WB client module 16 reports to the WB system 40 that use of a whiteboard has terminated, via the browser module 13. Further, the meeting reservation client module 14 receives, from the WB client module 16, a notification of termination of the use of the whiteboard, and issues a request for checking out of a meeting room 9 to the meeting reservation system 50. Therefore, the attendee does not need to perform a check-out operation in addition to a termination operation of a whiteboard.

### <<Another Operation of Starting Whiteboard>>

In the process disclosed in FIGS. 6A and 6B, a meeting host performs an explicit operation for opening a whiteboard, after performing a check-in operation. However, the terminal device 10 can open a whiteboard automatically without requiring such an explicit operation (or instruction). That is, operation for opening a whiteboard after a success of a check-in becomes unnecessary.

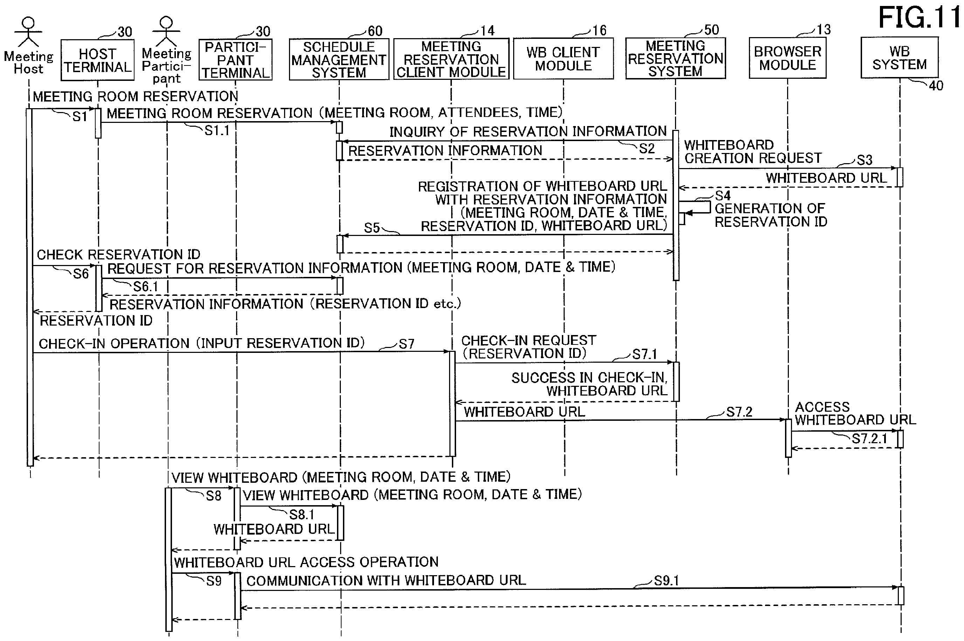

FIG. 11 is a sequence diagram illustrating an example of a sequence of procedures performed in the communication system 1 for creating and displaying a whiteboard. In the following, differences between FIGS. 6A and 6B and FIG. 11 are mainly described. Steps S1 to S7.1 in FIG. 11 are similar to the steps in FIGS. 6A and 6B. However, in a process illustrated in FIG. 11, the terminal device 10 displays a whiteboard.

S7.2: When a check-in has succeeded, the meeting reservation client module 14 in the terminal device 10 transmits a whiteboard URL to the browser module 13.

S7.2.1: The browser module 13 starts communication with the WB system 40, by using the whiteboard URL as a destination of communication. By performing this step, an initial screen of the whiteboard is displayed, as illustrated in the above description with reference to FIG. 6A (step S8.2.1). Steps S8 to S9.1 in FIG. 11 may be similar to the steps S11 to S12.1 in FIG. 6B, respectively.

### <<Timings to Create Whiteboard>>

FIGS. 6A and 6B or FIG. 11 discloses a case in which a whiteboard is created when a meeting room is reserved. In another embodiment, the meeting reservation system 50 may request to create a whiteboard at the following time-points:
- In response to receiving a reply to a reminder having been sent before a meeting
- At a time of check-in
- During a meeting

The above mentioned reminder (having been sent before a meeting) is a certain notice that is sent to a meeting host by the meeting reservation system 50, via a chat system or an e-mail. The reminder is sent in order to reduce unused reservations. If a schedule of a meeting is unchanged, a meeting host of the meeting having received a reminder makes a reply to the reminder, stating that the meeting will be held. Hence, if the meeting reservation system 50 requests to create a whiteboard in response to receiving a reply to a reminder having been sent before a meeting, occurrence of a case of a waste of a created whiteboard because of a cancellation of a meeting can be prevented. In a case in which a whiteboard is created in response to receiving the reply to the reminder, a whiteboard URL is sent to the terminal device 10 at a time of check-in, similar to the above described process.

If a whiteboard is created at time of check-in, a similar effect can be obtained. That is, because a whiteboard is created when a meeting is actually held (such as a case when check-in is performed), waste of a whiteboard can be reduced. In a case in which a whiteboard is created at time of check-in, a whiteboard URL is sent, at the time of check-in, from the WB system 40 to the meeting reservation system 50, and from the meeting reservation system 50 to the terminal device 10.

The meeting reservation system 50 can also request to create a whiteboard during a meeting. A user such as a meeting host performs, on the terminal device 10, an operation for starting a whiteboard. A function (or process) for creating a whiteboard during a meeting may be used, for example, in a case in which a reservation of a meeting room 9 was not made. The process for creating a whiteboard during a meeting will be described in a second embodiment.

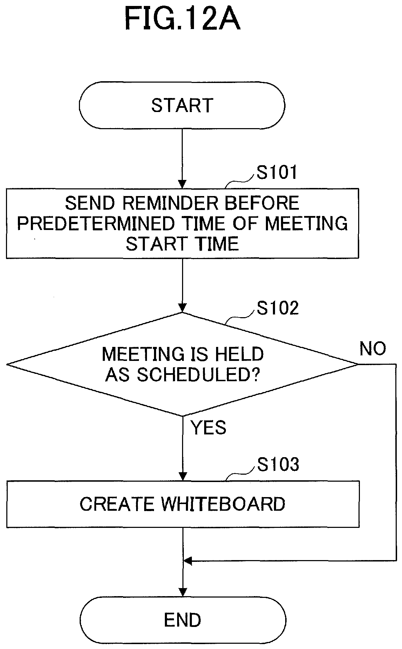

FIG. 12A is a flowchart illustrating an example of a flow of a process for creating a whiteboard in response to receiving a reply to a reminder. The meeting room management module 51 in the meeting reservation system 50 sends a reminder to an attendee at a prescribed time before a meeting start time (S101). The reminder may be sent via a chat system or an e-mail. The reminder is sent with identification information such as a reservation ID, which is capable of identifying reservation information.

The meeting room management module 51 determines whether a reply indicating that the meeting will be held as scheduled is received or not (S102). The attendee may attempt to return a reply indicating that holding the meeting has been determined (or indicating that the meeting has been cancelled), but if the meeting room management module 51 does not receive a reply from the attendee within a predetermined period of time from a time when the reminder has been sent, the meeting room management module 51 may determine that the meeting has been cancelled. If the determination at step S102 is negative (S102: NO), a process in FIG. 12A terminates.

If the determination at step S102 is affirmative (S102: YES), the WB creation instruction module 53 requests the WB system 40 to create a whiteboard (S103).

A reminder message sent via an e-mail or a chat system may include a created whiteboard URL. By doing this, a whiteboard is not only displayed on the terminal device, but also is able to be accessed by a personal user terminal 30 easily.

The meeting room management module 51 may send a reminder multiple times. For example, the meeting room management module 51 may send a reminder three times, one week before a meeting, one day before the meeting, and ten minutes before the meeting. In such a case, a whiteboard may be created in response to receiving a reply (indicating that holding the meeting has been determined) to a reminder sent at a predetermined time (such as a second reminder). Further, a whiteboard may be created in response to a reply to a last reminder. In a case in which a whiteboard is created in response to a reply to a last reminder, possibility of occurrence of cancellation of the meeting decreases. Thus, waste of a whiteboard can be prevented.

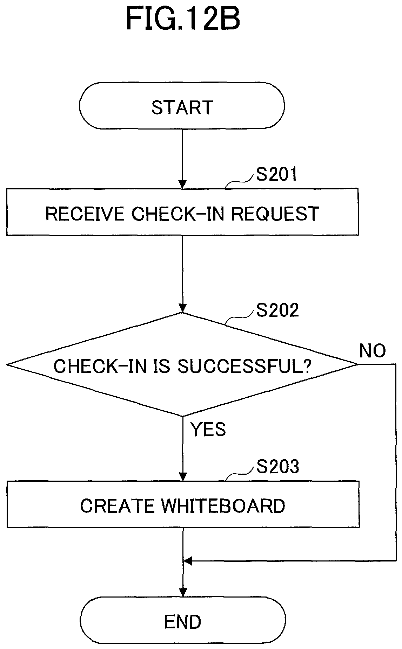

FIG. 12B is a flowchart illustrating an example of a flow of a process for creating a whiteboard at a time of check-in. The meeting room management module 51 in the meeting reservation system 50 receives a request for check-in (S201).

The meeting room management module 51 checks if the check-in has succeeded (S202). If the determination at step S202 is negative (S202: NO), a process in FIG. 12B terminates. That is, a whiteboard is not created.

If the determination at step S202 is affirmative (S202: YES), the WB creation instruction module 53 requests the WB system 40 to create a whiteboard (S203).

### <Timings to Start Using Whiteboard>

If a whiteboard has already been created, the terminal device 10 can start using a whiteboard at any time.
- From a time of reserving a meeting room to a time before a meeting:
   Each attendee can start using a whiteboard on his/her own user terminal 30, by acquiring a whiteboard URL registered with the schedule management system 60.
- At a time of check-in:
   The terminal device 10 starts using a whiteboard on the terminal device 10 when a meeting host performs check-in on the terminal device 10 in a meeting room 9 (as described above with reference to FIG. 11).
- During a meeting
   A meeting host or the like starts using a whiteboard by operating the terminal device 10.

### <Automatic Deletion of Whiteboard>

After a reservation of a meeting room 9 has been made, a case in which the reservation is cancelled may happen. If a generated whiteboard remains in an unused state, unused whiteboards increase and accumulate in the WB system 40. As a result, resource pressure in the WB system 40 occurs. In order to release unused resources, the WB system 40 deletes a whiteboard.

If a whiteboard remains unused (remains in an initial screen state), the whiteboard is deleted at the following time-points:
- When a reservation of a meeting room 9 is cancelled.
- When a scheduled time (meeting time designated at a time of reservation) has passed, but check-in is not performed.

By deleting a whiteboard, resource pressure in the WB system 40, which occurs because unused whiteboards increase and accumulate in the WB system 40, can be suppressed.

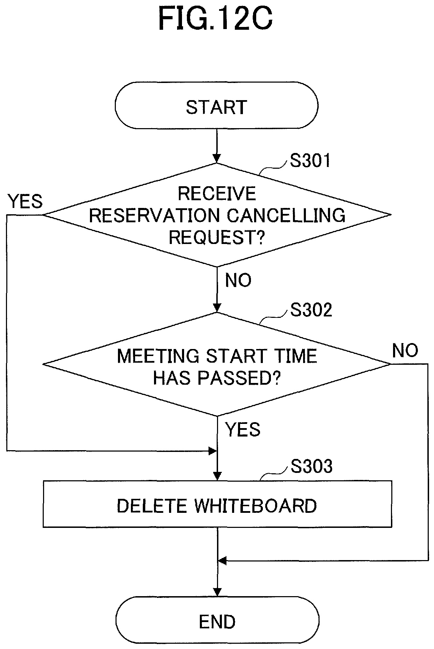

FIG. 12C is a flowchart illustrating an example of a flow of a process for deleting a whiteboard. The meeting room management module 51 in the meeting reservation system 50 determines if a cancellation request of a reservation has been received (S301). The cancellation request of a reservation may be notified via a reply to a reminder, or may be notified from the schedule management system 60 to the meeting reservation system 50, by the cancel reservation button 518 being pressed.

If the determination at step S301 is affirmative (S301: YES), the process proceeds to step S303.

If the determination at step S301 is negative (S301: NO), the meeting room management module 51 determines if a designated meeting start time has passed (S302).

If the determination at step S302 is negative (S302: NO), the process of FIG. 12C terminates. If the determination at step S302 is affirmative (S302: YES), the WB creation instruction module 53 requests the WB system 40 to delete a whiteboard, by designating a whiteboard URL (S303). Note that the meeting reservation system 50 has acquired the whiteboard URL from the WB system 40 when creating the whiteboard.

### <Sharing Whiteboard URL>

If an information processing apparatus capable of executing a web browser accesses a whiteboard URL, the information processing apparatus can display a whiteboard and thereby can share the whiteboard. The browser module 13 of the terminal device 10 includes a function for sharing a whiteboard URL easily with an attendee and the like.

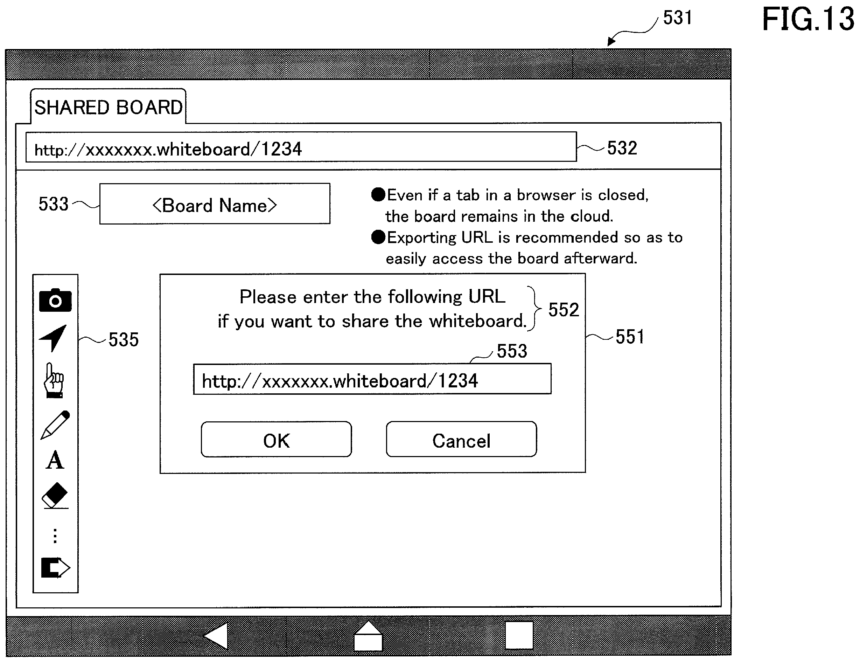

FIG. 13 is a diagram illustrating an example of a method of sharing a whiteboard URL. If an attendee or the like presses a given button on a whiteboard screen, a pop-up window 551 is displayed. The browser module 13 may acquire the pop-up window 551 from the meeting reservation system 50. The acquisition may be performed in advance.

On the pop-up window 551, a message 552 of "Please enter the following URL if you want to share the whiteboard", and a whiteboard URL 553 are displayed. As a whiteboard URL is explicitly displayed, attendees can share the whiteboard easier.

The following methods can be used for sharing:
- An attendee sends a whiteboard URL by using a chat system or a mailer. The attendee manually enters the whiteboard URL to the chat system or the mailer.
- The meeting reservation system 50 sends the whiteboard URL to an attendee or the like, by using an information sharing service (such as a chat service).
- The whiteboard URL is automatically sent to attendees registered with the schedule management system 60 via an e-mail.

Also, instead of simply sharing a whiteboard URL, a file obtained by converting an image of a whiteboard screen into the file (such as in PDF format) may be shared.

### <Registering Whiteboard URL with Attendee's Schedule>

In the above description, a case in which a whiteboard URL is registered with reservation information of a meeting room 9 has been described. In another embodiment, the terminal device 10 can register a whiteboard URL with attendees' schedules.

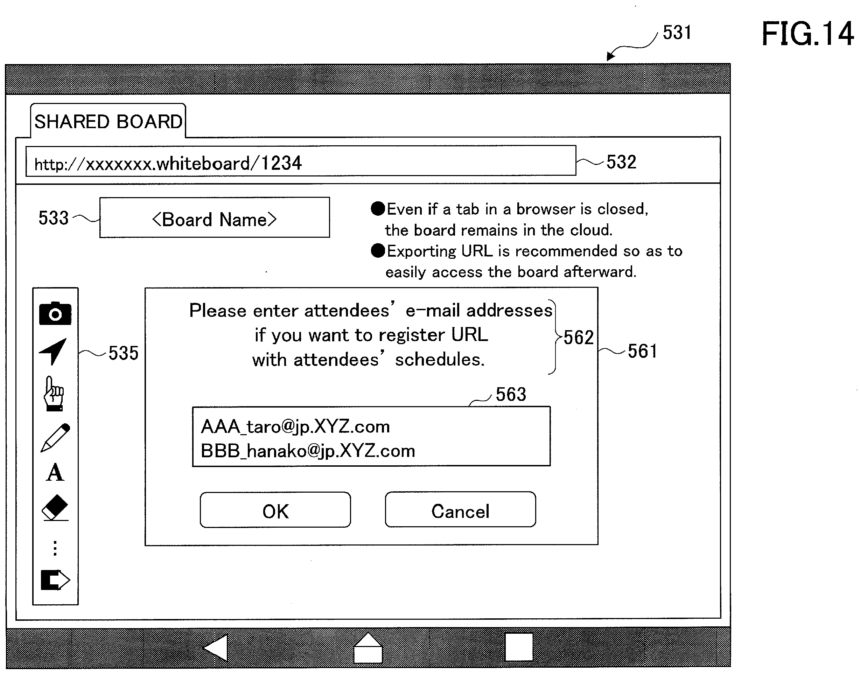

FIG. 14 is an e-mail address input window 561 which is used for registering a whiteboard URL with attendees' schedules. If an attendee or the like presses a given button on a whiteboard screen, the e-mail address input window 561 in FIG. 14 is displayed. By operation of the browser module 13, the e-mail address input window 561 pops up.

On the e-mail address input window 561, a message 562 of "Please enter attendees' e-mail addresses if you want to register URL with attendees' schedules", and an e-mail address input field 563 are displayed. An attendee enters, into the e-mail address input field 563, an e-mail address of another attendee with whom the attendee wants to share a whiteboard URL (note that an attendee may also enter his/her e-mail address into the e-mail address input field 563). The e-mail address is used by the meeting reservation system 50 as identification information of a user.

A whiteboard URL can be registered with attendees' schedules at the following time-points.

(At a time of reservation of a meeting room)
1. A meeting host registers attendees when making a reservation of a meeting room 9.
2. The meeting reservation system 50 detects that the meeting room 9 has been reserved.
3. The meeting reservation system 50 acquires e-mail addresses of attendees of a meeting to be held in the meeting room 9.
4. The meeting reservation system 50 registers a whiteboard URL with the attendees' schedules.

(When a button for sharing a whiteboard URL is pressed while a whiteboard is being used)
1. An attendee presses a button for sharing a whiteboard URL on a whiteboard screen.
2. The attendee enters, on the e-mail address input field 563, e-mail addresses of persons with whom the attendee wants to register the whiteboard URL.
3. The WB system 40 transmits the e-mail addresses of the persons (attendees) and the whiteboard URL to the meeting reservation system 50.
4. The meeting reservation system 50 transmits, to the schedule management system 60, the e-mail addresses of the persons (attendees) and the whiteboard URL, and the schedule management system 60 registers the whiteboard URL with the schedules of the persons (attendees).

(When a button for terminating a whiteboard is pressed)
1. An attendee presses a button for terminating a whiteboard on a whiteboard screen.
2. The attendee enters, on the e-mail address input field 563, e-mail addresses of persons with whom the attendee wants to register the whiteboard URL.
3. The WB system 40 transmits the e-mail addresses of the persons (attendees) and the whiteboard URL to the meeting reservation system 50.
4. The meeting reservation system 50 transmits, to the schedule management system 60, the e-mail addresses of the persons (attendees) and the whiteboard URL, and the schedule management system 60 registers the whiteboard URL with the schedules of the persons (attendees).

### <Summary>

As described above, according to the communication system 1 of the present embodiment, in response to a check-in operation by an attendee, the terminal device 10 acquires a whiteboard URL from the meeting reservation system 50 and displays an initial screen while communicating with the WB system 40. Thus, an attendee can use a whiteboard only by performing a check-in operation. Also, as the whiteboard URL is registered with the schedule management system 60, if an attendee acquires the whiteboard URL from the schedule management system 60 after a meeting, the attendee can again display, on his/her user terminal 30, information such as handwritten information, which has been displayed on the terminal device 10 during the meeting.

### (Second Embodiment)

In a second embodiment, how to start a whiteboard in a case in which a meeting starts in a meeting room 9 that has not been reserved by the schedule management system 60 will be described. For example, when it is suddenly determined that a meeting is held, the meeting may start without making reservation of a meeting room. The meeting reservation system 50 according to the present embodiment can start a whiteboard in such a case.

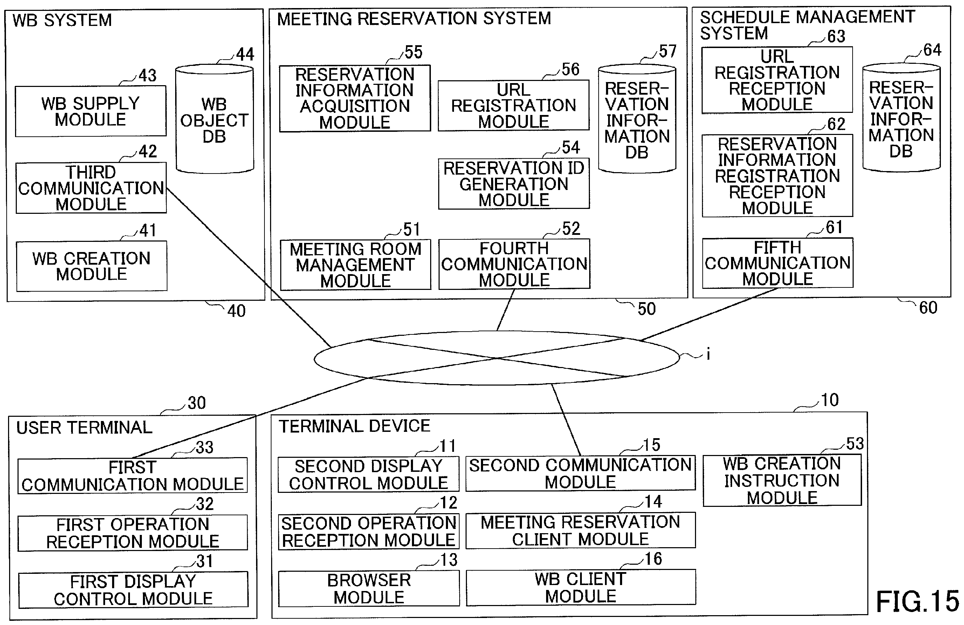

Functions of the communication system 1 according to the second embodiment will be described with reference to FIG. 15. FIG. 15 is an example of a functional block diagram illustrating each functional unit (module) in the WB system 40, the meeting reservation system 50, the schedule management system 60, the user terminal 30, and the terminal device 10, as a block. In the following description, differences between FIG. 15 and FIG. 4 are mainly described.

The communication system 1 according to the second embodiment is different from the communication system 1 according to the first embodiment in that the meeting reservation system 50 does not include the WB creation instruction module 53 but the terminal device 10 includes the WB creation instruction module 53. Note that functions of the WB creation instruction module 53 in the second embodiment may be the same as those described in the first embodiment.

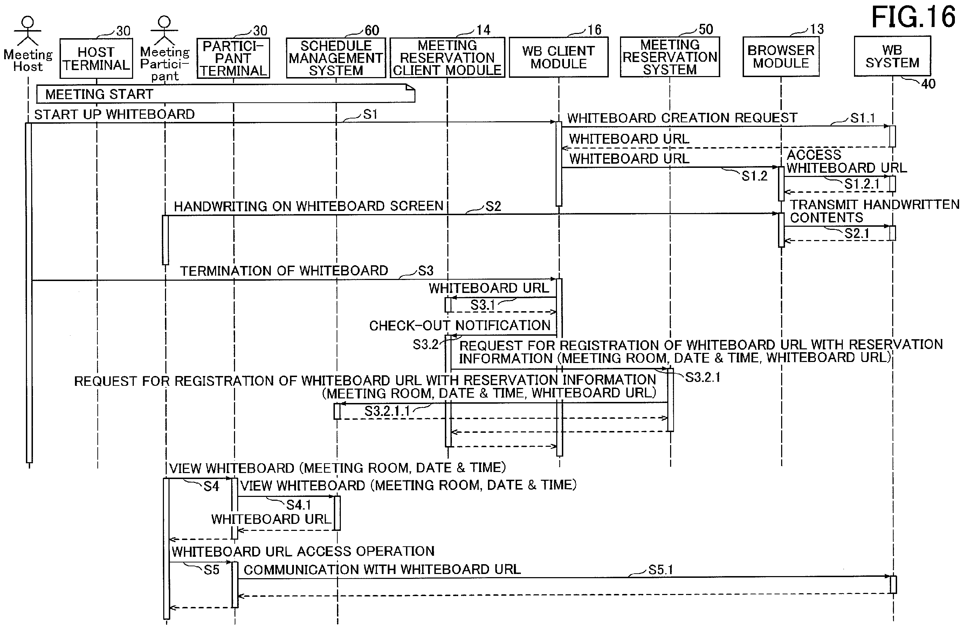

FIG. 16 is a sequence diagram illustrating an example of a sequence of procedures performed in the communication system 1 for creating and displaying a whiteboard. In the following description, differences between FIG. 16 and FIG. 11 are mainly described. Steps S1 to S1.2.1 in FIG. 16 are similar to the steps S7 to S7.2.1 in FIG. 11. However, in a process illustrated in FIG. 16, as a meeting room 9 is not reserved, a check-in operation is not required. Thus, at Step S1, a meeting host presses an icon for starting a whiteboard. The second operation reception module 12 in the terminal device 10 receives the operation (icon pressing operation) for starting a whiteboard. At Step S1.1, the WB client module 16 causes the WB creation instruction module 53 to request the WB system 40 to create a whiteboard. Accordingly, the terminal device 10 can acquire a whiteboard URL corresponding to the created whiteboard.

Steps S2 and S2.1 in FIG. 16 are similar to the steps S9 to S9.1 in FIG. 6A.

S3: A meeting host performs an operation for terminating the whiteboard on the terminal device 10.

S3.1: When the second operation reception module 12 in the terminal device 10 receives the operation for terminating the whiteboard, the WB client module 16 sends the whiteboard URL to the meeting reservation client module 14.

S3.2: The WB client module 16 sends a check-out request to the meeting reservation client module 14 in response to the operation for terminating the whiteboard.

S3.2.1: The meeting reservation client module 14 issues a request for registering the whiteboard URL with the schedule management system 60 to the meeting reservation system 50, by designating a name of a meeting room in which a meeting has been held and date and time of the meeting. The registration of the whiteboard URL may be performed when starting the whiteboard, instead of registering the whiteboard URL at an end of a meeting. For example, in a case in which it is determined that a user such as an attendee performs a predetermined operation (an operation for starting a meeting room, a check-in operation, or the like) when starting a meeting in a state in which a meeting room has not been reserved, as illustrated in FIG. 16, the whiteboard URL may be registered with the schedule management system 60 in response to receiving the predetermined operation.

S3.2.1.1: When the fourth communication module 52 in the meeting reservation system 50 receives the whiteboard URL, the URL registration module 56 issues a request for registering the whiteboard URL to the schedule management system 60, by designating the name of the meeting room and the date and time.

Steps S4 and S5.1 in FIG. 16 are similar to the steps S8 to S9.1 in FIG. 11.

### <Summary>

As described above, according to the communication system 1 of the second embodiment, the meeting reservation system 50 can start a whiteboard even when it is suddenly determined that a meeting is held. Also, as a whiteboard URL is registered with the schedule management system 60 when an attendee finishes a meeting, the attendee can display a whiteboard screen that was used during the meeting, by accessing the schedule management system 60.

### (Third Embodiment)

In the first or second embodiment, the terminal device 10 includes and performs the following two modules, the meeting reservation client module 14 and the WB client module 16. However, in a third embodiment, a communication system in which a terminal device having the meeting reservation client module 14 and another terminal device having the WB client module 16 are present will be described. In the following description, a terminal device having the meeting reservation client module 14 will be referred to as a "meeting room terminal 10B" and a terminal device having the WB client module 16 will be referred to as a "WB terminal 10A". The WB terminal 10A is a different terminal device from the meeting room terminal 10B, which means that the WB terminal 10A is physically separate from the meeting room terminal 10B.

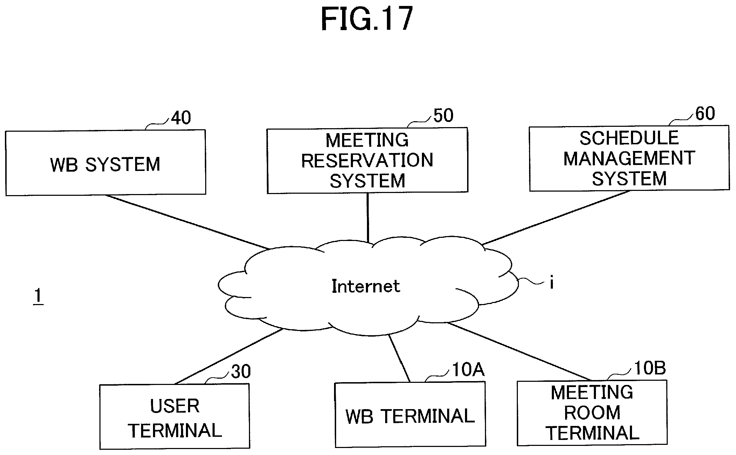

FIG. 17 is a schematic diagram illustrating a configuration of the communication system 1 according to the third embodiment. In the following description, differences between FIG. 17 and FIG. 2 will be mainly described. In FIG. 17, each of the WB terminal 10A and the meeting room terminal 10B is connected to the Internet i.

Similar to the terminal device 10, each of the WB terminal 10A and the meeting room terminal 10B is a general purpose information processing apparatus, such as a smartphone, a tablet device, and a laptop PC (Personal Computer). Each of the WB terminal 10A and the meeting room terminal 10B may be an information processing apparatus including a communication function, displaying function, and an input function. The WB terminal 10A may also be an electronic whiteboard, a video conference terminal, a projector, or a combination thereof.

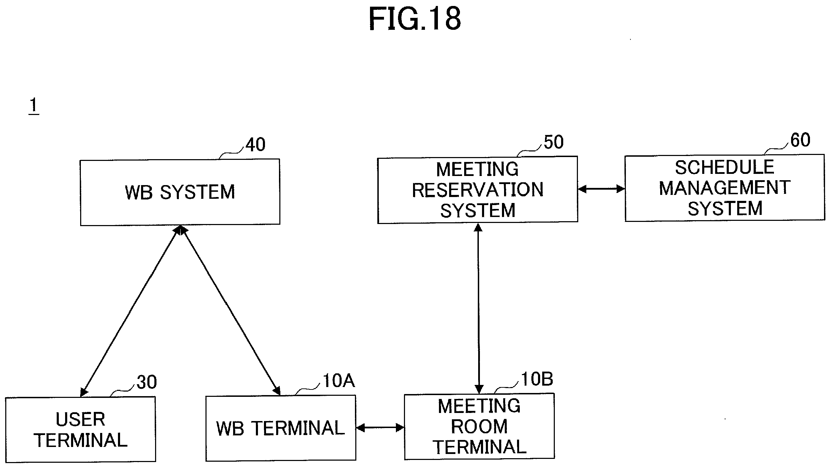

FIG. 18 is a diagram illustrating an example of communication routes between the systems (or the terminals) in the communication system 1. As illustrated in FIG. 18, in the present embodiment, the user terminal 30 and the WB terminal 10A communicate with the WB system 40, and the meeting room terminal 10B communicates with the meeting reservation system 50. The WB terminal 10A also communicates with the meeting room terminal 10B. Further, the meeting reservation system 50 communicates with the schedule management system 60. In the example illustrated in FIG. 18, the WB system 40 does not communicate with the meeting reservation system 50. However, similar to the first embodiment, the communication system 1 may be configured such that the WB system 40 can communicate with the meeting reservation system 50.

In the first or second embodiment, the meeting reservation client module 14 and the WB client module 16 in the terminal device 10 interoperate (communicate) with each other within the terminal device 10. In the third embodiment, the WB terminal 10A and the meeting room terminal 10B communicate with each other via a network. An example of the network is a LAN. In a case in which the network is a wireless LAN, the WB terminal 10A and the meeting room terminal 10B communicate with each other via an access point. In a case in which the network is a wired LAN, the WB terminal 10A and the meeting room terminal 10B communicate with each other via a hub or a router. In a case in which the network is a wireless LAN, the WB terminal 10A and the meeting room terminal 10B directly communicate with each other by establishing a peer-to-peer connection such as Wi-Fi Direct (registered trademark). The WB terminal 10A and the meeting room terminal 10B may also communicate with each other by using Bluetooth (registered trademark).

The present embodiment describes the communication system 1 in which the WB client module 16 can display reservation information managed by the meeting reservation system 50 on a whiteboard, by using the configuration of the communication system 1 illustrated in FIG. 17 or FIG. 18. Note that the configuration illustrated in FIG. 18, in which the WB terminal 10A and the meeting room terminal 10B communicate with each other, is applicable to the first or second embodiment.

### <Functional Units>

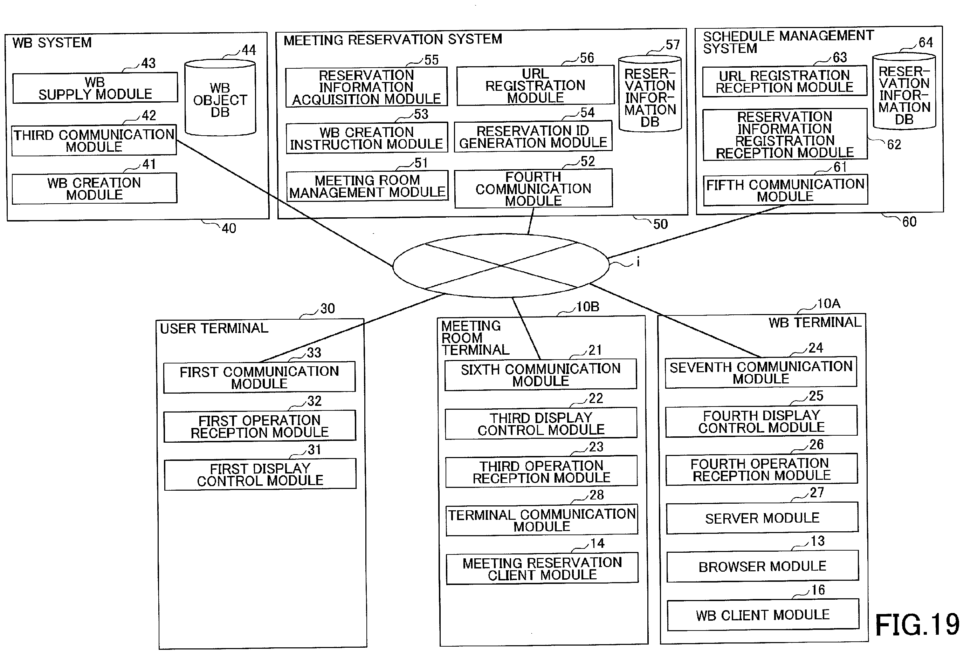

FIG. 19 is an example of a functional block diagram illustrating each functional unit (module) in the WB system 40, the meeting reservation system 50, the schedule management system 60, the user terminal 30, the meeting room terminal 10B, and the WB terminal 10A, as a block. In the following description, differences between FIG. 19 and FIG. 4 are mainly described. FIG. 19 is different from FIG. 4 in that the meeting room terminal 10B and the WB terminal 10A in FIG. 19 have their own functional units (modules) respectively. A hardware configuration of the meeting room terminal 10B and a hardware configuration of the WB terminal 10A may be similar to the hardware configuration of the computer system 200 illustrated in FIG. 3.

First, functions of the meeting room terminal 10B will be described. The meeting room terminal 10B includes a sixth communication module 21, a third display control module 22, a third operation reception module 23, a meeting reservation client module 14, and a terminal communication module 28. Each of the above functional units (modules) in the meeting room terminal 10B is embodied by at least one of the hardware elements in FIG. 3 being operated by instructions from the CPU 206 that is operated in accordance with a program loaded from the HDD 208 onto the RAM 204.

The sixth communication module 21 transmits various types of information mainly to the meeting reservation system 50, and receives various types of information mainly from the meeting reservation system 50. In the present embodiment, the sixth communication module 21 receives reservation information regarding a reservation of a meeting room 9 where a meeting room terminal 10B including the sixth communication module 21 is placed, by issuing a request for acquiring reservation information by designating identification information of the meeting room 9. The sixth communication module 21 also issues a check-in request (including a reservation ID, a meeting room name, and date and time), and receives a result (success or failure) of the check-in request and a whiteboard URL.

The third display control module 22 displays various screen images on the display device 202. For example, the third display control module 22 displays reservation information received by the sixth communication module 21. The third operation reception module 23 receives various types of user operations that are made to the meeting room terminal 10B. For example, a check-in operation (input of a reservation ID), a check-out operation, and the like, are received. The third display control module 22 and the third operation reception module 23 may be embodied by browser software or other application software.

The meeting reservation client module 14 is a client application of the meeting reservation system 50. The meeting reservation client module 14 sends a notification of check-in or check-out via the sixth communication module 21.

The terminal communication module 28 is an application used for communication with a server module 27 that the WB terminal 10A has. For example, the terminal communication module 28 sends information to the WB terminal 10A, in compliance with a communication protocol supported by a general purpose server, such as HTTP or HTTPS. The terminal communication module 28 also receives information from the WB terminal 10A. An IP address and a port number of the server module 27 of the WB terminal 10A are set to the terminal communication module 28.

Next, functions of the WB terminal 10A will be described. The WB terminal 10A includes a seventh communication module 24, a fourth display control module 25, a fourth operation reception module 26, a browser module 13, a WB client module 16, and the server module 27. Each of the above functional units (modules) in the WB terminal 10A is embodied by at least one of the hardware elements in FIG. 3 being operated by instructions from the CPU 206 that is operated in accordance with a program loaded from the HDD 208 onto the RAM 204.

The seventh communication module 24 transmits various types of information mainly to the WB system 40, and receives various types of information mainly from the WB system 40. In the present embodiment, the seventh communication module 24 transmits a whiteboard URL to the WB system 40, and receives screen information of a whiteboard from the WB system 40.

The browser module 13 has functions similar to generic browser software. The browser module 13 communicates with the WB system 40 by using a whiteboard URL as a destination of communication, and displays a webpage (may also be referred to as a web application) to function as a whiteboard on the display device 202, by analyzing screen information of a whiteboard received by the seventh communication module 24.

The fourth display control module 25 displays various screen images or information on the display device 202. The fourth display control module 25 can display what the browser module 13 cannot display. However, functions of the fourth display control module 25 and functions of the browser module 13 are not required to be distinguished clearly.

The WB client module 16 performs processes for causing a screen of a whiteboard displayed by the browser module 13 to function as a whiteboard. For example, the WB client module 16 displays a handwritten stroke on the display device 202. The WB client module 16 also performs a process for transmitting stroke data to the WB system 40. Further, the WB client module 16 converts an image drawn by a stroke on the display device 202 into a PDF file, and saves the PDF file.

The server module 27 acts as a server with respect to the meeting room terminal 10B. The server module 27 does not need to have a function as a web server for providing screen information written in HTML and the like. The server module 27 receives, from the meeting room terminal 10B, information as a request in compliance with a certain protocol such as HTTP or HTTPS, and transmits information in response to the request.

As described above, because the WB terminal 10A has the server module 27, the meeting room terminal 10B and the WB terminal 10A can communicate with each other. Note that a configuration in which the meeting room terminal 10B has the server module 27 and in which the WB terminal 10A has the terminal communication module 28 is also possible.

### <Reservation Information>

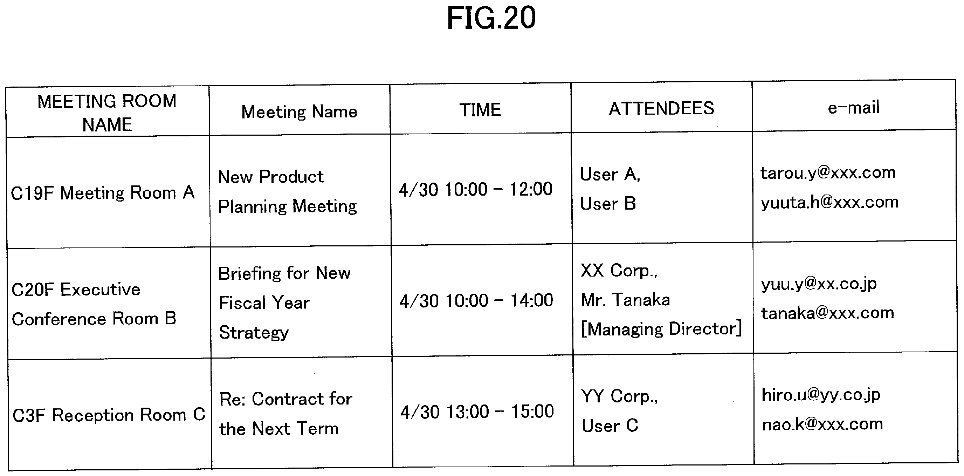

FIG. 20 illustrates an example of reservation information stored in the reservation information DB 57 according to the present embodiment. The reservation information according to the present embodiment includes items of a meeting room name, a meeting name, a time, attendees, and e-mail addresses of the attendees. As described in the first embodiment, such reservation information is transmitted from the schedule management system 60 to the meeting reservation system 50, and the reservation information is further transmitted from the meeting reservation system 50 to the meeting room terminal 10B. Further, in the present embodiment, the meeting room terminal 10B transmits the reservation information to the WB terminal 10A.

Note that FIG. 20 is merely an example of reservation information. Reservation information may also include other information related to a meeting, such as a date when a reservation of a meeting room has been made, information indicating whether or not the meeting has been held suddenly, job titles of attendees, roles of attendees in the meeting. Reservation information of a meeting is not limited to that in FIG. 20. Also, such reservation information may be referred to as bibliographic-like information of a meeting.

### <Process of WB Terminal When Displaying Reservation Information>

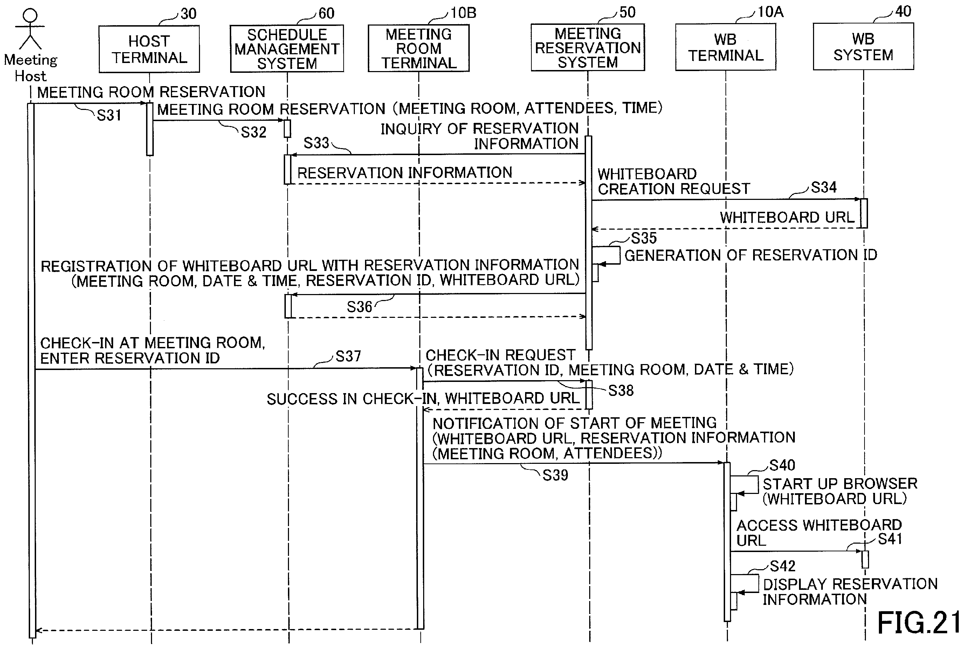

FIG. 21 is a sequence diagram illustrating an example of a sequence of procedures performed in the communication system 1, in which the communication system 1 creates a whiteboard at a time of reservation, and in which the whiteboard is displayed at a time of check-in. In the following description, differences between FIG. 21 and FIGS. 6A and 6B are mainly described. Steps S31 to S36 in FIG. 21 are similar to the steps S1 to S5 in FIG. 6A.

As described in the first embodiment, when a reservation ID has been registered with the schedule management system 60, a meeting host can check (recognize) the reservation ID which is required for check-in. Illustrations of the procedures for checking the reservation ID are omitted in FIG. 21, because the procedures are similar to the steps S6 to S6.1 in FIG. 6A.

Next, a process performed when a meeting is started will be described.

S37: The meeting host visits a meeting room 9, and performs a check-in operation (inputting the reservation ID) on the meeting room terminal 10B. The check-in operation can also be performed by a meeting participant.

S38: When the third operation reception module 23 in the meeting room terminal 10B receives an operation required for check-in (input of the reservation ID), the meeting reservation client module 14 in the meeting room terminal 10B transmits, to the meeting reservation system 50, a check-in request including the meeting room name, the date and time, and the reservation ID. A reservation ID is not required to be received at a time of check-in. Instead, only a button pressing operation of a "start" button or an "enter" button, which indicates a start of a meeting, may be received. When the fourth communication module 52 in the meeting reservation system 50 receives the check-in request, the meeting room management module 51 determines whether the check-in succeeds or not (whether the check-in is allowed or not). That is, the meeting room management module 51 determines whether reservation information including a set of the meeting room name, the date and time, and the reservation ID received from the meeting room terminal 10B is maintained in the meeting room management module 51 or not. FIG. 21 illustrates a case in which the check-in has succeeded, and in the following description, a case in which the check-in has succeeded will be described. When the check-in has succeeded, the fourth communication module 52 in the meeting reservation system 50 transmits a whiteboard URL identified by the reservation ID to the meeting room terminal 10B. Note that the meeting room terminal 10B acquires reservation information in advance in order to process a check-in request. Thus, the meeting room terminal 10B does not need to acquire the reservation information at step S38. However, the meeting reservation system 50 may transmit the reservation information at step S38. The meeting room terminal 10B acquires reservation information from the meeting reservation system 50 periodically, at least once a day, and displays a reservation status of a meeting room (such as a presence or absence of a reservation at every time slot) on a check-in screen.

Note that the determination may be performed based on information other than the meeting room name and the date and time. Any identification information capable of uniquely identifying a reservation event of a meeting room may be used for the determination. This is applicable to other processes to be described below.

S39: When the check-in has succeeded, the terminal communication module 28 in the meeting room terminal 10B transmits a notification of start of a meeting to the WB terminal 10A. That is, a process for making a whiteboard usable by an attendee is performed. The notification of start of a meeting includes a whiteboard URL and reservation information. If an operation for pressing a "start" button or an "enter" button indicating a start of a meeting is received at step S38, the notification of a start of a meeting, instead of the reservation information, may be sent at step S39.

S40: When the server module 27 in the WB terminal 10A receives the notification of start of a meeting, the browser module 13 starts.

S41: The browser module 13 having been started accesses the whiteboard URL. By performing this step, a whiteboard created at step S34 can be accessed.

S42: The browser module 13 (alternatively the fourth display control module 25) displays the reservation information on the whiteboard. Various types of displaying methods (of the reservation information) can be employed. For example, the fourth display control module 25 may pop up a window of the reservation information by superimposing the window on a whiteboard. The fourth display control module 25 may also display the reservation information as a notification message such as a tooltip. Alternatively, the fourth display control module 25 may display a notification icon to display the reservation information when the notification icon is pressed. Alternatively, the browser module 13 may display reservation information contained in screen information created by the WB system 40. That is, reservation information is embedded in the screen information written with HTML, JavaScript (registered trademark), CSS, or the like. In this case, the seventh communication module 24 in the WB terminal 10A transmits the reservation information to the WB system 40. By using the received reservation information, the WB creation module 41 creates screen information (may also be referred to as a webpage or a web application) with HTML, JavaScript (registered trademark), CSS, or the like. As the seventh communication module 24 in the WB terminal 10A receives the screen information, the browser module 13 can display the reservation information as a part of the whiteboard.

A time when reservation information is transmitted to the WB terminal 10A is not limited to a case in which reservation information is received by the meeting room terminal 10B when a meeting starts and in which the reservation information is sent to the WB terminal 10A. For example, when a whiteboard is created at step S34, the meeting reservation system 50 may transmit reservation information to the WB system 40, and the WB system 40 may create screen information containing the reservation information at this time. The screen information may be displayed by the WB terminal 10A after a meeting starts.

As described above, in the communication system 1 according to the present embodiment, the WB terminal 10A can display reservation information with a whiteboard.

### <Display Example of Reservation Information>

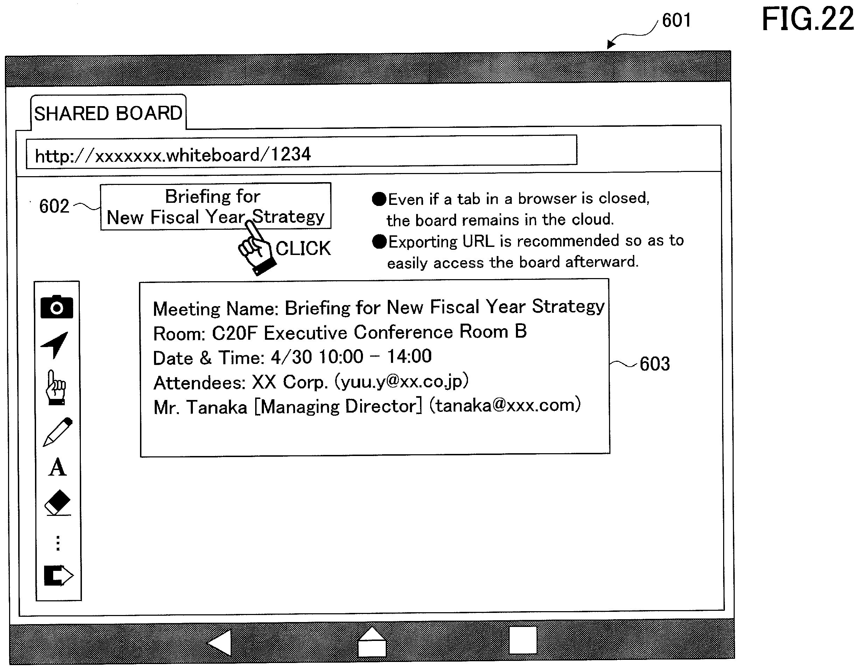

FIG. 22 is an example of a reservation information screen 601 displayed by the browser module 13 in the WB terminal 10A. The reservation information screen 601 mainly includes a reservation information display button 602 and a reservation information display box 603. The reservation information display button 602 is a button used for displaying reservation information. The reservation information is displayed on the reservation information display box 603.

At a time when the browser module 13 in the WB terminal 10A receives screen information containing reservation information, a whiteboard is in an initial state and the reservation information display box 603 has not been displayed. If an attendee presses the reservation information display button 602, the fourth operation reception module 26 receives the operation (pressing the reservation information display button 602), and the browser module 13 displays the reservation information display box 603. Once the reservation information display box 603 is displayed, the reservation information display box 603 may remain displayed. Alternatively, the reservation information display box 603 may be deleted automatically (without receiving an attendee's operation).

As reservation information is displayed on a whiteboard, an attendee can determine with which meeting the whiteboard is associated. In a case in which only a whiteboard is displayed, an attendee cannot determine whether or not the whiteboard is associated with a meeting to be started from now.

In another embodiment, the browser module 13 may automatically display the reservation information display box 603 when the seventh communication module 24 in the WB terminal 10A receives screen information containing reservation information. Also in this case, after the reservation information display box 603 is displayed, the reservation information display box 603 may remain displayed, or may be deleted automatically (without receiving an attendee's operation).

Note that the reservation information screen 601 illustrated in FIG. 22 is merely an example. In another embodiment, reservation information may be directly displayed on a whiteboard as text data. Further, reservation information may be displayed in combination with image data such as a photograph or a figure. A display method of reservation information is not limited to that in FIG. 22.

A screen image such as FIG. 22 can be saved as a file, such as a PDF file, by a function of the WB client module 16. Accordingly, the WB terminal 10A according to the present embodiment can save reservation information and a rendered image into a same PDF file. Therefore, after an attendee opens the PDF file to see the rendered image, the attendee can easily recognize in which meeting the PDF file has been saved, based on the reservation information.

### <Addition of Attendee after Start of Meeting>

It is possible that an unexpected person may join a meeting after the meeting has started. According to the communication system 1 of the present embodiment, the meeting reservation system 50 acquires reservation information to which a new participant is added, and the WB terminal 10A can display the new participant.

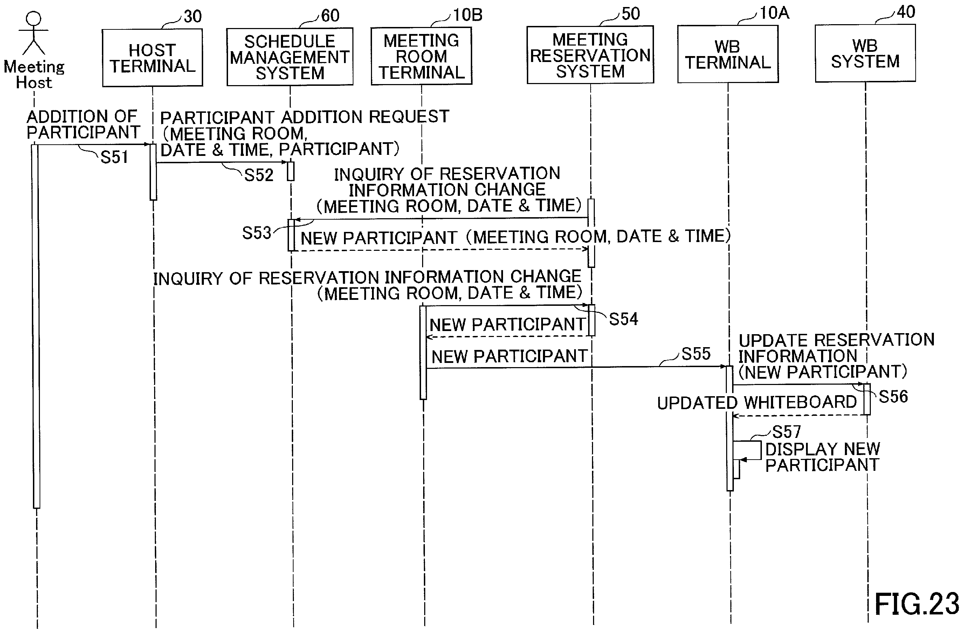

FIG. 23 is a sequence diagram illustrating an example of a process (a sequence of procedures) performed in the communication system 1, in which the communication system 1 displays a new participant. The process in FIG. 23 is executed after the process in FIG. 21 has been executed and a meeting is in progress.

S51: When a person who is not registered with reservation information joins a meeting, a meeting host performs an operation for adding the person (hereinafter referred to as a new participant) on the host terminal.

S52: When the first operation reception module 32 in the host terminal receives the operation by the meeting host, the first communication module 33 issues a request for adding a new participant to reservation information of a meeting room 9. The request is, for example, accompanied with a meeting room name, date and time, and a name of the new participant. When the fifth communication module 61 in the schedule management system 60 receives the request, the reservation information registration reception module 62 adds the name of the new participant to the reservation information DB 64.

S53: The reservation information acquisition module 55 in the meeting reservation system 50 is periodically (by polling) making an inquiry of occurrence of change of reservation information to the schedule management system 60. For making the inquiry, the reservation information acquisition module 55 transmits, for example, a meeting room name and date and time. In response to the inquiry, the reservation information acquisition module 55 receives a changed portion of the reservation information. The present embodiment describes a case in which information of attendees in the reservation information has been changed. In another embodiment, instead of receiving a changed portion of reservation information, the reservation information acquisition module 55 may receive the entirety of reservation information again, and the meeting reservation system 50 may identify a changed portion in the reservation information.

S54: The meeting reservation client module 14 in the meeting room terminal 10B periodically makes an inquiry of occurrence of change of reservation information, to the meeting reservation system 50. It is preferable that an interval of the periodic inquiries is short, such as one minute. Accordingly, if an unexpected person joins a meeting, the WB terminal 10A can display a name of the person as a participant. Thus, it is preferable that the inquiry of occurrence of change of reservation information is periodically made at a shorter interval than an interval before the meeting. In this case, an interval of the inquiries of occurrence of change of reservation information that are issued from the meeting reservation system 50 to the schedule management system 60 needs to be short, such as one minute.

In a case in which the reservation information of the meeting has been changed, the fourth communication module 52 in the meeting reservation system 50 transmits what has been changed in the reservation information to the meeting room terminal 10B. FIG. 23 describes a case in which information of attendees in the reservation information has been changed. Thus, a name of a new participant is transmitted.

S55: When the sixth communication module 21 in the meeting room terminal 10B receives the name of the new participant, the terminal communication module 28 transmits the name of the new participant to the WB terminal 10A.

S56: The server module 27 in the WB terminal 10A receives the name of the new participant. Next, the seventh communication module 24 requests the WB system 40 to update the reservation information by transmitting the name of the new participant to a whiteboard URL. When the third communication module 42 in the WB system 40 receives the request for updating the reservation information, the WB creation module 41 updates screen information of a whiteboard.

S57: The third communication module 42 in the WB system 40 transmits the updated screen information of the whiteboard to the WB terminal 10A. When the seventh communication module 24 in the WB terminal 10A receives the screen information, the browser module 13 displays the name of the new participant. In displaying the reservation information, various types of methods that have been explained in the description of step S42 in FIG. 21 may be employed. It is preferable that a name of a new participant is displayed without an operation of a participant, to indicate that the new participant is accepted.

As described above, in the present embodiment, information (such as a name) of a new participant can be displayed on a whiteboard. Also, when a screen image of a whiteboard is to be saved in a PDF file, the name of the new participant can also be saved.

In the example of FIG. 23, a meeting host has to register a new participant with the schedule management system 60. If the process for adding a new participant, as illustrated in FIG. 23, can be performed by the new participant, the communication system 1 will be more convenient.

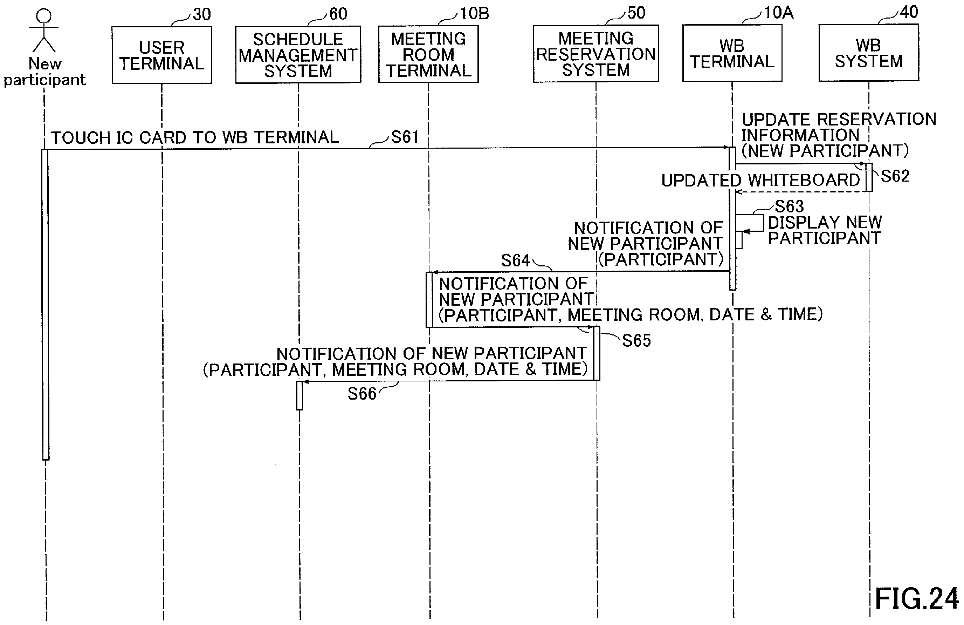

FIG. 24 is a sequence diagram illustrating another example of a process (a sequence of procedures) performed in the communication system 1, in which the communication system 1 displays a new participant.

S61: During a meeting, when a person (hereinafter referred to as a new participant) who is not registered with reservation information joins the meeting, the new participant holds his/her IC card near the WB terminal 10A. Information for identifying the new participant (an ID, a name, an e-mail address, and the like) is stored in the IC card.

S62: The WB terminal 10A includes an IC card reader, and the IC card reader reads the information for identifying the new participant from the IC card of the new participant. Actually, to perform an authentication using the information in the IC card, the WB terminal 10A transmits the information for identifying the new participant, and receives a result (success or failure) of the authentication, a name of the new participant, and the like.

The seventh communication module 24 in the WB terminal 10A requests the WB system 40 to update the reservation information. The request transmitted to the WB system 40 includes a name of the new participant. Accordingly, screen information containing the name of the new participant is transmitted to the WB terminal 10A.

S63: When the seventh communication module 24 in the WB terminal 10A receives the screen information, the browser module 13 displays the name of the new participant.

S64: In order to register the new participant with the schedule management system 60, the server module 27 in the WB terminal 10A transmits the name of the new participant to the meeting room terminal 10B.

S65: When the terminal communication module 28 in the meeting room terminal 10B receives the name of the new participant, the terminal communication module 28 sends a notification for adding the new participant (may also be referred to as a "notification of new participant") to the meeting reservation system 50, which includes the name of the new participant, a meeting room name, and a reservation ID.

S66: When the fourth communication module 52 in the meeting reservation system 50 receives the notification of new participant, the URL registration module 56 sends the notification of new participant to the schedule management system 60. By performing this step, information (such as a name) of the new participant is registered with reservation information managed in the schedule management system 60. Note that an e-mail indicating that a new participant has been added may be sent to each attendee.

According to the sequence of procedures illustrated in FIG. 24, a new participant can be added easily only by a simple operation of holding an IC card near the WB terminal 10A by the new participant.

In the example illustrated in FIG. 24, a case in which a new participant holds his/her IC card near the WB terminal 10A is described. In another embodiment, a new participant holds his/her IC card near the meeting room terminal 10B. In this case, the meeting room terminal 10B transmits information of the new participant to the WB terminal 10A. Authenticating a participant may be performed by either the meeting room terminal 10B or the WB terminal 10A. Further, information identifying a participant, and information identifying a meeting (a meeting room name and date and time), is transmitted from the meeting room terminal 10B to the meeting reservation system 50, and are also registered with the schedule management system 60.

### <Procedures for creating Whiteboard URL after Check-in>

In the example illustrated in FIG. 21, a case in which a whiteboard URL is created at a time of reservation is described. In another embodiment, a whiteboard URL may be created at a time of check-in.

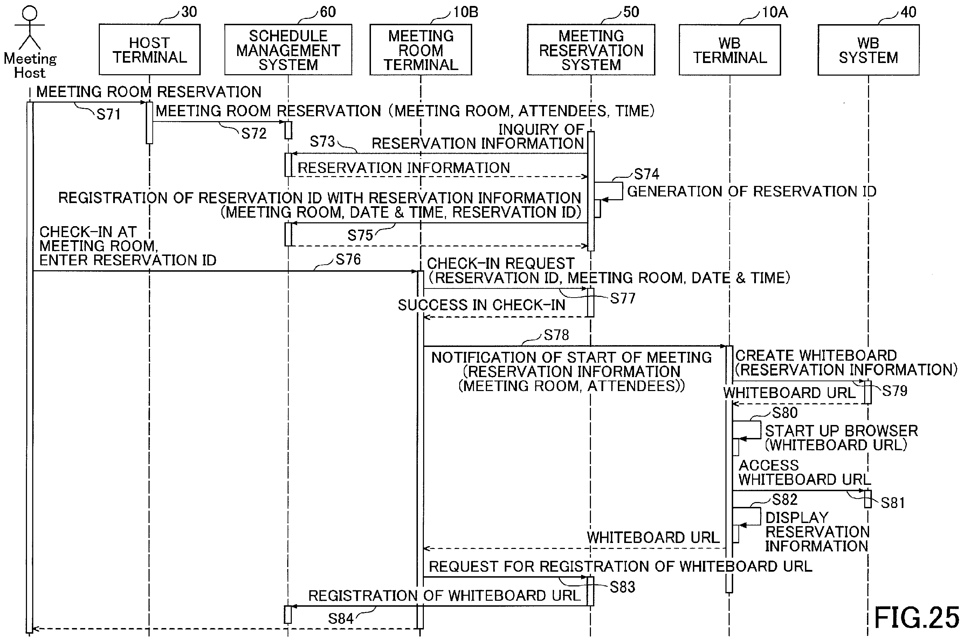

FIG. 25 is a sequence diagram illustrating an example of a sequence of procedures performed in the communication system 1, in which the communication system 1 creates a whiteboard URL at a time of check-in, and in which reservation information is displayed on a whiteboard corresponding to the whiteboard URL. In the following description, differences between FIG. 25 and FIG. 21 are mainly described.

S71 to S75: Steps S71 to S75 in FIG. 25 are similar to the steps S31 to S36 in FIG. 21. However, in the process of FIG. 25, as a whiteboard URL is not created at a time of reservation, a step corresponding to the step S34 in FIG. 21 is not present in FIG. 25. Also, at step S75, a reservation ID is registered with the schedule management system 60.

S76 to S78: These steps are similar to the steps S37 to S39 in FIG. 21.

S79: When the seventh communication module 24 in the WB terminal 10A receives a notification of start of a meeting, the WB client module 16 issues, to the WB system 40, a request for creating a whiteboard which is accompanied with reservation information. When the third communication module 42 in the WB system 40 receives the request for creating a whiteboard, the WB creation module 41 creates a new whiteboard and associates the new whiteboard with a new URL. The whiteboard URL is sent to the meeting reservation system 50.

S80 to S82: These steps are similar to the steps S40 to S42 in FIG. 21. However, in order to register the whiteboard URL with the schedule management system 60, the seventh communication module 24 in the WB terminal 10A transmits the whiteboard URL to the meeting room terminal 10B.

S83: In order to register the whiteboard URL with the schedule management system 60, the sixth communication module 21 in the meeting room terminal 10B issues, to the meeting reservation system 50, a request for registering a whiteboard URL, which is accompanied with the whiteboard URL, a meeting room name, and date and time.

S84: When the fourth communication module 52 in the meeting reservation system 50 receives the request for registering a whiteboard URL, the URL registration module 56 registers the whiteboard URL with the schedule management system 60.

As described above, in the communication system 1 according to the present embodiment, a whiteboard URL is created at a time of check-in, and the WB terminal 10A can display reservation information.

### <Summary>

In a case in which only a whiteboard is displayed, a user such as an attendee cannot determine whether or not the whiteboard is associated with a meeting to be started as of the current time. However, as described above, according to the communication system 1 of the present embodiment, because reservation information is displayed on a whiteboard, a user can determine with which meeting the whiteboard is associated.

### <Other Application Examples>

Although a best mode for practicing the present invention has been described with reference to embodiments, the present invention is not limited to these embodiments. Various changes and replacements may be made without departing from the scope of the invention.

For example, a meeting of the same agenda as that for a previous meeting may be held again. In such a case, an attendee may wish to use a whiteboard that has already been created. Thus, it is useful that the WB creation instruction module 53 determines resemblance of reservation information of meetings (two meetings for example), obtains a whiteboard URL from the reservation information having resemblance higher than a threshold, and provides the whiteboard URL to the terminal device 10. The resemblance may be calculated based on, for example, commonality of names of meetings, commonality of attendees, and the like.

Further, in the above embodiments, description that the terminal device 10 has three functions (a function regarding a use of a meeting room 9, a function regarding a whiteboard, and a browser function) has been made. However, in another embodiment, a communication system 1 may include multiple terminal devices 10 and the three functions may reside in different (separate) terminal devices 10 respectively. The terminal devices 10 may communicate with each other via an intranet.

Further, in the examples of configurations illustrated in FIG. 4 and the like, functional blocks in accordance with major functions in the WB system 40, the meeting reservation system 50, the schedule management system 60, the user terminal 30, and the terminal device 10 are described, to facilitate understanding of the WB system 40, the meeting reservation system 50, the schedule management system 60, the user terminal 30, and the terminal device 10. However, the present invention is not limited to a type of division of units of process or to a name of each unit of process. Functional blocks in the WB system 40, the meeting reservation system 50, the schedule management system 60, the user terminal 30, and the terminal device 10 may be further divided into more units of process depending on types of processes. Alternatively, one functional block may be configured to include more processes than that in the above described embodiments.

Further, multiple WB systems 40, multiple meeting reservation systems 50, or multiple schedule management systems 60 may reside in the communication system. Alternatively, functions of the WB system 40, the meeting reservation system 50, and the schedule management system 60 may be distributedly installed in multiple information processing apparatuses.

The reservation information acquisition module 55 is an example of an information acquisition means, the WB creation instruction module 53 is an example of a whiteboard creation requesting means, the fourth communication module 52 is an example of a transmitting means, the WB client module 16 is an example of a retrieving means, the second communication module 15 and the seventh communication module 24 are examples of a first communicating means, the WB system 40 is an example of a service (or a service providing system), the schedule management system 60 is an example of a second information processing apparatus, and the meeting reservation system 50 is an example of a first information processing apparatus.

The URL registration module 56 is an example of a registration means, the first communication module 33 is an example of a second communicating means, the meeting room management module 51 is an example of a facility management means, and the second operation reception module 12 is an example of a reception means. The browser module 13 is an example of a display processing means.

## Claims

1. A communication system accessible to a service for managing screen information of an electronic information board, the communication system comprising:
a first information processing apparatus; and
a terminal device provided in a facility, the terminal device being configured to communicate with the first information processing apparatus via a network; wherein
the first information processing apparatus includes
an information acquisition means for acquiring, from a second information processing apparatus configured to manage a schedule of utilization of the facility, information about the schedule,
a board creation requesting means for requesting the service to create the electronic information board in response to receiving the information about the schedule, and
a transmitting means for transmitting, to the terminal device, access information for the electronic information board; and
the terminal device includes
a retrieving means for retrieving the access information for the electronic information board, and
a first communicating means for accessing the electronic information board by using the access information for the electronic information board.

2. The communication system according to claim 1, the first information processing apparatus further including a registration means for registering the access information for the electronic information board with the second information processing apparatus, by associating the access information for the electronic information board with the information about the schedule,
wherein the access information for the electronic information board retrieved by the retrieving means from the first information processing apparatus is information acquired by the first information processing apparatus from the second information processing apparatus, based on the information about the schedule.

3. The communication system according to claim 2, further comprising a user terminal of a user, the user terminal including a second communicating means for acquiring the access information for the electronic information board from the second information processing apparatus, and for accessing the electronic information board using the access information for the electronic information board.

4. The communication system according to any one of claims 1 to 3, the terminal device further comprising a reception means for receiving a request for starting use of the facility, and a request transmitting means for transmitting the request for starting the use of the facility to the first information processing apparatus;
the first information processing apparatus further comprising a facility management means for allowing the use of the facility, in response to success of authentication performed based on the request for starting the use of the facility received from the terminal device;
wherein, in a case in which the facility management means allows the use of the facility, the retrieving means retrieves the access information for the electronic information board, and the first communicating means accesses the electronic information board by using the access information for the electronic information board.

5. The communication system according to claim 4, wherein the board creation requesting means requests the service to delete the electronic information board, in a case in which a reservation for the use of the facility is cancelled or in which a start time of the reservation has elapsed before the facility management means receives the request for starting the use of the facility.

6. The communication system according to claim 4, wherein, in a case in which the use of the facility is allowed,
the board creation requesting means requests the service to create the electronic information board, and
the transmitting means transmits access information for the electronic information board to the terminal device.

7. The communication system according to claim 4, wherein the facility management means transmits a reminder about a reservation of the facility to a user terminal of a user at a prescribed time before a start time of the reservation, based on the information about the schedule; and
wherein, in response to receiving a reply to the reminder, the reply indicating that the facility will be used, the board creation requesting means requests the service to create the electronic information board, and the transmitting means transmits access information for the electronic information board to the terminal device.

8. The communication system according to claim 1, the terminal device further including a display processing means for displaying the information about the schedule; wherein, when the transmitting means in the first information processing apparatus transmits the information about the schedule to the terminal device,
the retrieving means in the terminal device retrieves the information about the schedule from the first information processing apparatus, and
the display processing means displays the information about the schedule on a display device.

9. The communication system according to claim 8,
wherein the schedule is related to a reservation of a meeting room, and
the information about the schedule includes at least one of a name of a meeting, a meeting room name, date and time, and a name of an attendee.

10. The communication system according to claim 8 or 9, wherein the display processing means
displays a whiteboard on the display device, the whiteboard being based on the screen information obtained as a result of the accessing of the electronic information board by using the access information for the electronic information board, and
displays the information about the schedule on the whiteboard.

11. The communication system according to claim 8 or 9, wherein the first communicating means transmits the information about the schedule to the service, and
the display processing means displays the information about the schedule on the display device by displaying the whiteboard based on the screen information created by the service, the screen information containing the information about the schedule.

12. The communication system according to claim 11, wherein the reception means receives a stroke drawn on the whiteboard, and
the terminal device is configured to save the information about the schedule and the stroke into a same file.

13. The communication system according to any one of claims 8 to 12, wherein
the transmitting means transmits information about an attendee of a meeting to the terminal device, the information about the attendee being obtained from the second information processing apparatus after the meeting is started;
the retrieving means retrieves the information about the attendee from the first information processing apparatus after the meeting is started; and
the display processing means displays the information about the attendee on the screen device.

14. A communication method performed in a communication system including a first information processing apparatus and a terminal device provided in a facility, the terminal device being configured to communicate with the first information processing apparatus via a network, the communication system being accessible to a service for managing screen information of an electronic information board, the method comprising:
acquiring, by the first information processing apparatus, from a second information processing apparatus configured to manage a schedule of utilization of the facility, information about the schedule;
requesting, by the first information processing apparatus, the service to create the electronic information board in response to receiving the information about the schedule;
transmitting, by the first information processing apparatus, access information for the electronic information board to the terminal device;
retrieving, by the terminal device, the access information for the electronic information board; and
accessing, by the terminal device, the electronic information board by using the access information for the electronic information board.

15. An information processing apparatus communicable with a terminal device via a network, the terminal device being provided in a facility and being accessible to a service for managing screen information of an electronic information board, the information processing apparatus comprising:
an information acquisition means for acquiring, from another information processing apparatus configured to manage a schedule of utilization of the facility, information about the schedule;
a board creation requesting means for requesting the service to create the electronic information board in response to receiving the information about the schedule; and
a transmitting means for transmitting, to the terminal device, access information for the electronic information board.
